# EUROPÄISCHE PATENTSCHRIFT

(11) **EP 1 791 885 B1**
(45) Veröffentlichungstag und Bekanntmachung des Hinweises auf die Patenterteilung: **17.03.2010**
(21) Anmeldenummer: 05789591.4
(22) Anmeldetag: 09.09.2005
(51) Int. Cl.: C08G 18/67

(54) **VERFAHREN ZUR HERSTELLUNG VON ACRYLHALTIGEN HAFTKLEBEMASSEN**
METHOD FOR PRODUCING CONTACT ADHESIVE MASSES CONTAINING ACRYLIC
PROCEDE POUR PRODUIRE DES MATIERES AUTO-ADHESIVES CONTENANT DE L'ACRYLATE

(30) Priorität: 09.09.2004 DE 102004044087; 09.09.2004 DE 102004044084
(43) Veröffentlichungstag der Anmeldung: 06.06.2007
(73) Patentinhaber: TESA SE, 20253 Hamburg (DE)
(72) Erfinder: DOLLASE, Thilo, 22397 Hamburg (DE); KOOP, Matthias, 22848 Norderstedt (DE)
(86) Internationale Anmeldenummer: PCT/EP2005/054505
(87) Internationale Veröffentlichungsnummer: WO 2006/027386

(56) Entgegenhaltungen:
- DE-A1- 10 359 973

## Beschreibung

Die Erfindung betrifft ein Verfahren zur Herstellung von acrylhaltigen Haftklebemassen. Sie betrifft ferner Haftklebemassen, die mittels des Verfahrens hergestellt wurden, sowie die Verwendung derartiger Haftklebemassen.

Im Zuge eines gesteigerten Umweltbewusstseins und dem Bestreben, Produkte immer effizienter herzustellen, setzen sich auf dem Gebiet der Haftklebemassen mehr und mehr lösungsmittelfreie Beschichtungsprozesse durch.

Ein lösungsmittelfreier Beschichtungsprozess stellt jedoch hohe Anforderungen an die zu verarbeitenden Haftklebemassen, da nicht nur die Verarbeitbarkeit von ihren viskoelastischen Eigenschaften abhängt sondern auch ihr späteres Eigenschaftsprofil. Oftmals widersprechen sich die für die Verarbeitung und die Produkteigenschaften günstigen Anforderungen, die an die Viskoelastizität der Haftklebemasse gestellt werden. Produkte mit hoher Scherfestigkeit enthalten beispielsweise häufig Polymere mit hohen Polymerisationsgraden. Dies führt jedoch zu hohen Schmelzviskositäten und damit aufwendigerer lösungsmittelfreier Verarbeitbarkeit.

Seine entgültige Struktur erhält eine lösungsmittelfrei beschichtete Haftklebemasse häufig erst nach einem Vernetzungsschritt, über den die Balance aus adhäsiven und kohäsiven Eigenschaften des Produkts eingestellt wird. Beispielhaft seien hier chemische, wie z. B. die Vulkanisation von Kautschuken, strahlenchemische, wie z. B. die UV-Behandlung von Polyacrylaten und physikalische Vernetzungsprozesse, wie z. B. die thermoreversible Bildung hocherweichender Domänen in synthesekautschukbasierenden Systemen genannt.

Haftklebemassen auf Basis von Polyacrylaten stellen eine der wichtigsten Grundtypen an Adhäsiven in Selbstklebebändem dar, die insbesondere bei anspruchsvollen und hochwertigen Anwendungen zum Einsatz kommen. Man macht sich bei diesen Produkten die gute Witterungs- und UV-Beständigkeit sowie die Zugänglichkeit wasserklar transparenter Ausführungsformen bei einer gut einstellbaren Balance aus Klebkraft und Wärmescherfestigkeit zu Nutze. Ferner kann auf eine große Breite an Monomeren beim Aufbau der Haftklebemassen zurückgegriffen werden, was zu weiteren Eigenschaftssteuermöglichkeiten führt. Auch für Haftklebemassen basierend auf Polyacrylaten ist der Trend zu lösungsmittelfrei beschichtbaren Systemen zu verzeichnen.

Beispiele für lösungsmittelfrei beschichtbare Polyacrylate, die als Haftklebemassen verwendet werden, sind in der Literatur zu finden. Man kann dabei zwischen zwei Konzepten unterscheiden, der Verwendung von Polymeren mit zunächst geringem Polymerisationsgrad, die im Anschluss an die Beschichtung durch Einwirken aktinischer Bestrahlung vernetzt werden, und der Verwendung sogenannter Acrylat-Hotmelts, bestehend aus Polymeren mit hoher Schmelzviskosität bei Raumtemperatur. Systeme, die zur ersten Gruppe zählen, lassen sich zwar gut beschichten, doch sind die kohäsiven Eigenschaften des Produkts, wie es sich beispielsweise in der Wärmescherfestigkeit äußert, oftmals verbesserungswürdig. Beispiele sind in EP 377 199 durch BASF und US 4,181,752 durch 3M offenbart. Ansätze, die zur zweiten Gruppe zählen, werden beispielsweise in US 5,391,406 von National Starch, WO 93/09152 durch Avery Dennison oder DE 195 242 50 durch Beiersdorf beschrieben. Für die dort beschriebenen Systeme werden zwar gute Produkteigenschaften gefunden, jedoch gestaltet sich die lösungsmittelfreie Beschichtung dieser Haftklebemassen oftmals schwierig.

DE 100 29 554 beschreibt ein Verfahren zur Herstellung vernetzbarer Acrylathaftklebemassen mit Molmassen von über 200 000 g/mol. In einem ersten Schritt werden Polyacrylate aus einem Monomerengemisch hergestellt, das in einer Ausführungsform Acryl- und Methacrylsäure-Monomere und ein oder mehrere Carbonsäureanhydride mit olefinischen Doppelbindungen umfassen kann. Der so erhaltenen Polyacrylatmasse werden in einem zweiten Schritt weitere Monomere zugesetzt, die zumindest zwei funktionelle Gruppen besitzen. Die erste funktionelle Gruppe soll dabei mit dem Carbonsäureanhydrid reagieren, während die zweite funktionelle Gruppe eine vemetzungsfähige Gruppe ist. Beispiele für derartige Monomere sind Hydroxygruppen enthaltende Acrylate. Die erhaltenen Haftklebemassen können anschließend mit Vernetzern abgemischt werden. Geeignete Vernetzer sind bi- oder multifunktionelle Acrylate, bi- oder multifunktionelle Isocyanate oder bi- oder multifunktionelle Epoxide. Die Acrylathaftklebemassen sollen aus der Schmelze verarbeitet werden.

Aus DE 100 30 217 ist ebenfalls eine Polyacrylathaftklebemasse bekannt, die Polymere mit Molmassen von mehr als 250 000 g/mol enthält und mit einem Vernetzer, beispielsweise einem bi- oder multifunktionellen Acrylat, bi- oder multifunktionellen Isocyanat oder bi- oder multifunktionellen Epoxid, abgemischt werden kann. Die Polyacrylathaftklebemasse wird aus einer Lösung auf das Trägermaterial aufgebracht.

DE 41 27 513 offenbart Bindemittelgemische für Lacke, die aus einer Polyisocyanatkomponente und einer hydroxyfunktionalisierten Polyacrylatkomponente bestehen. Die beiden Komponenten werden in einem Lösungsmittel miteinander vermischt und auf ein Trägermaterial aufgetragen. DE 42 20 807 beschreibt ebenfalls die Zugabe von Vernetrern zu einem Vinylpolymerisat in einem Lösungsmittel.

DE 43 24 801 offenbart ein Verfahren zur Herstellung eines Lackes. Dabei wird eine erste, polymere Komponente mit einer zweiten Komponente, die einen Vernetzer umfassen kann, versetzt. Bei der ersten Komponente kann es sich um (Meth)acryl-Copolymerisate handeln, die OH-Gruppen enthalten, während als zweite Komponente u.a. Polyisocyanate vorgeschlagen werden. Die Zugabe der zweiten Komponente zu der ersten Komponente soll in Substanz erfolgen können, wenn die Komponenten eine niedrige Viskosität aufweisen. Die beschriebenen Systeme sind jedoch nicht als Haftklebemassen geeignet. Molmassen der beschriebenen Polymere liegen bei höchstens 8600 g/mol.

DE 103 59 973, beschreibt ein Verfahren zur Herstellung von Haftklebemassen, die auf Acrylatblockcopolymeren basieren. Das Acrylatblockcopolymer wird durch Verknüpfen von zwei chemisch verschiedenen Acrylatpolymerblöcken erhalten. DE 101 57 695 offenbart ein Verfahren zur Herstellung von Polymeren durch Verknüpfen von zwei Komponenten. Die erste Komponente ist ein Poly(meth)acrylat mit einem zahlenmittleren Molekulargewicht von 2.000 bis 100.000 g/mol, an dessen Enden funktionelle Gruppen ausgebildet sind. Die zweite Komponente weist an ihren Enden ebenfalls funktionelle Gruppen auf. Die Verknüpfung der beiden Komponenten erfolgt über die an den Enden der Komponenten befindlichen funktionellen Gruppen. Für die Herstellung der ersten Komponente sind spezielle Maßnahmen für die Realisierung der Endfunktionalisierung erforderlich.

Keine dieser Entgegenhaltungen offenbart somit ein Verfahren, mit denen einfach zugängliche Komponenten aus der Schmelze lösungsmittelfrei umgesetzt werden können.

Es besteht daher der Bedarf, ein Haftklebemassensystem und einen Beschichtungsprozess für dieses Haftklebemassensystem zur Verfügung zu stellen, so dass durch die geeignete Verbindung von Haftklebemassesystem und Beschichtungsprozess die Nachteile des Standes der Technik, nämlich die verbesserungswürdige Kombination aus guten Eigenschaften bei der lösungsmittelfreien Beschichtung und guten Produkteigenschaften, insbesondere in Bezug auf Wärmescherfestigkeit zu erreichen, gelöst wird.

Der Erfindung liegt die Aufgabe zugrunde, ein Verfahren zur Herstellung von acrylhaltigen Haftklebemassen anzugeben, die in selbstklebenden Produkten zu guten haftklebrigen Eigenschaften führen, insbesondere das Dahlquist-Kriterium erfüllen und eine gute Balance aus Adhäsion und Kohäsion erreichen, aber gleichzeitig gut lösungsmittelfrei prozessierbar und beschichtbar sind. Die Erfindung betrifft ferner Haftklebemassen, die durch dieses Verfahren erhalten werden sowie deren Verwendung in selbstklebenden Produkten.

Diese Aufgabe wird durch die Merkmale der Ansprüche 1, 30 und 36 gelöst. Zweckmäßige Ausgestaltungen der Erfindungen ergeben sich aus den Merkmalen der Ansprüche 2 bis 29 sowie 31 bis 35.

Danach besteht die Erfindung in einem acrylhaltigen Haftklebemassensystem bzw. einem Verfahren zur Herstellung einer Haftklebemasse, das durch Kopplung zumindest eines in zumindest einer Komponente enthaltenen reaktiven Bestandteils mit zumindest einem weiteren in zumindest einer weiteren Komponente enthaltenen reaktiven Bestandteil aufgebaut wird, wobei
- der zumindest eine reaktive Bestandteil in der zumindest einen Komponente zumindest zwei funktionelle Gruppen und der zumindest eine Bestandteil in der zumindest einen weiteren Komponente zumindest zwei funktionelle Gruppen enthält;
- zumindest ein reaktiver Bestandteil zumindest einer eingesetzten Komponente ein funktionalisiertes Acrylatcopolymer ist, das ein Gewichtsmittel seiner Molmassenverteilung zwischen 5 000 g/mol und 200 000 g/mol, bevorzugt zwischen 10 000 g/mol und 100 000 g/mol aufweist, wobei das Acrylatcopolymer ein Copolymer ist, das aus zumindest einer unfunktionalisierten Monomersorte und zumindest einer funktionalisierten Monomersorte aufgebaut ist, wobei die zumindest zwei funktionellen Gruppen in Form der einpolymerisierten funktionalisierten Monomersorte eingebracht sind; und
- die Komponenten zur Herstellung der Haftklebemasse lösungsmittelfrei verarbeitet werden.

Die funktionalisierte Monomerkomponente ist über das gesamte Acrylatcopolymer verteilt, also zum Beispiel statistisch. Es sind aber auch Gradienten in der Einbauhäufigkeit der funktionalisierten Monomere entlang der Ketten vorteilhaft und erfindungsgemäß. Damit befinden sich die funktionellen Gruppen dieser Komponente, die für die Kopplung der Komponente mit der zweiten Komponente erforderlich sind, nicht oder zumindest nicht ausschließlich am Ende des Acrylatcopolymers. Vielmehr sind die funktionellen Gruppen entlang der Kette des Acrylatcopolymers enthalten. Die Kopplung der beiden Komponenten erfolgt nicht oder zumindest nicht ausschließlich über Gruppen, die sich am Ende des Acrylatcopolymers befinden. Dies ermöglicht eine im Vergleich zum Stand der Technik einfachere Herstellung von Haftklebemassen.

Im Sinne dieser Erfindung ist unter dem Begriff "Copolymer" stets ein Polymer oder ein Polymerblock zu verstehen, der aus mindestens zwei Sorten an Comonomeren aufgebaut ist. Die Comonomerzusammensetzung kann innerhalb dieses Copolymeres oder Copolymerblocks statistisch sind oder sich entlang der Kette ändern.

Über das erfindungsgemäße Verfahren sind Haftklebemassen zugänglich, die das Dahlquist-Kriterium erfüllen und eine gute Balance aus Adhäsion und Kohäsion erreichen, wobei das Komponentengemisch zur Herstellung der Haftklebemassen aber gleichzeitig gut lösungsmittelfrei prozessierbar und beschichtbar ist, insbesondere aufgrund einer geringen Schmelzviskosität im Zustand des zu prozessierenden Materials.

Der hier beschriebene Ansatz nutzt als Lösung für diese technische Problemstellung das Konzept, ein Material zu verarbeiten, das erst nach der Beschichtung seine entgültige Struktur erreicht. Die angestrebte erfindungsgemäße acrylathaltige Haftklebemasse wird durch Vermischen von zumindest zwei Komponenten, die jeweils zumindest einen Bestandteil enthalten, der mit zumindest einem Bestandteil der jeweils anderen Komponente während des Prozessierens reagieren kann, hergestellt. In einer Auslegung dieser Erfindung schließt sich der Beschichtungsprozess so schnell an den Beginn der Komponentenvermischung an, dass das Gemisch trotz einsetzender Reaktion der reaktiven Bestandteile noch eine gute Verarbeitbarkeit aufweist. Während der Beschichtung und/oder anschließend beispielsweise auf einer Bahn reagieren die reaktiven Bestandteile in diesem Mehrkomponentengemisch zu einer Haftklebemasse mit guten klebtechnischen Eigenschaften ab. Die resultierende, bevorzugt lösungsmittelfrei beschichtete Haftklebemasse ist typischerweise derart strukturell aufgebaut, dass sie in ihrem endgültigen Zustand nicht oder nur eingeschränkt beschichtbar ist. Ferner sind selbstklebende Produkte, die auf den erfindungsgemäßen Haftklebemassen basieren und über den erfindungsgemäßen lösungsmittelfreien Beschichtungsprozess hergestellt werden, Teil dieser Erfindung.

Die Erfindung wird nachstehend unter Bezugnahme auf die Zeichnungen ausführlicher erläutert. Dabei zeigen
- Fig. 1: schematische Darstellungen der Kopplung zweier Komponenten mittels Wasserstoffbrückenbindungen;
- Fig. 2: schematische Darstellungen der Kopplung zweier Komponenten mittels koordinativen Bindungen;
- Fig. 3: schematische Darstellungen der Kopplung zweier Komponenten mittels koordinativen Bindungen unter Verwendung des Schlüssel-Schloss-Prinzips; und
- Fig.4: schematische Darstellungen von selbstklebenden Produkten, die Haftklebemassen umfassen, die gemäß dem Verfahren der vorliegenden Erfindung hergestellt worden sind.

Teil dieser Erfindung ist die Herstellung und Zusammensetzung einer lösungsmittelfrei beschichtbaren acrylathaltigen Haftklebemasse, deren Beschichtungsprozess sowie selbstklebende Produkte, die zumindest eine der erfindungsgemäßen Haftklebemassen enthalten und die durch den erfindungsgemäßen bevorzugt lösungsmittelfreien Beschichtungsprozess erhalten werden.

Es wurde überraschenderweise gefunden, dass über das erfindungsgemäße Konzept basierend auf einem Mehrkomponentenansatz bevorzugt lösungsmittelfrei beschichtbare acrylathaltige Haftklebemassen hergestellt und beschichtet werden können. Zu einem Zeitpunkt vor der Beschichtung werden die verschiedenen Einzelkomponenten vermischt. Bevorzugt währenddessen beginnt die Kopplung reaktiver Bestandteile, die in den verschiedenen Komponenten enthalten sind. Der Zeitpunkt der Vermischung der Komponenten und damit auch der Beginn der Kopplungsreaktion wird so gewählt, dass das Gemisch noch gut prozessierbar und beschichtbar ist. Zumindest eine Komponente enthält dabei zumindest ein Polymer geringer Molmasse, das mit funktionellen Gruppen ausgestattet ist und das im Weiteren als Präpolymer bezeichnet wird. Die während der Beschichtung ablaufende Reaktion mit zumindest einer Spezies aus zumindest einer weiteren Komponente führt zu einer Zunahme der Molmasse des zumindest einen Präpolymers, indem eine Kettenverlängerung und/oder eine Vernetzung stattfindet. Zumindest eine Komponente enthält als zumindest einen Bestandteil ein Präpolymer auf Basis eines Polyacrylats.

Die Viskosität des Gemischs der Einzelkomponenten zu Beginn der Reaktion ist durch die Zusammensetzung der Einzelkomponenten und die Verarbeitungstemperatur so eingestellt, dass sich das Gemisch bevorzugt lösungsmittelfrei auf beispielsweise eine laufende Bahn oder eine Auflegewalze beschichten lässt. Die Art der Bahn hängt vom gewünschten Aufbau des resultierenden selbstklebenden Produkts ab. Vor der Aufrollung der beschichteten Bahn können weitere Prozessschritte, wie beispielsweise eine Behandlung mit Strahlung und/oder Wärme eingebaut werden. Je nach Produktaufbau können zudem beliebige Träger, Schichten, Filme zu der beschichteten Bahn zukaschiert werden, so dass selbstklebende Produkte vielfältiger Art auf erfindungsgemäße Weise hergestellt werden können. Wird auf eine Auflegewalze beschichtet, kann der beschichtete Film ebenso auf beliebige Träger, Schichten, Filme kaschiert werden, so dass selbstklebende Produkte vielfältiger Art auf erfindungsgemäße Weise hergestellt werden können.

Um die Kombination aus guten Beschichtungs- und guten Produkteigenschaften für die erfindungsgemäßen Materialien deutlich zu machen, bieten sich als experimentelle Daten die Schmelzviskosität der zu prozessierenden Einzelkomponenten sowie der Plateaumodul der prozessierten Haftklebemasse an. Die Schmelzviskosität hängt bei Komponenten, die polymere Bestandteile enthält, u. a. von der Kettenlänge der Polymere ab. Eine wichtige Steuergröße der Prozessierbarkeit und Beschichtbarkeit bei der Herstellung der erfindungsgemäßen Haftklebemassen ist die Molmasse der Polymere. Niedrige Viskositäten hängen oft mit guter Prozessierbarkeit zusammen. Kurze Polymere erscheinen daher prädestiniert als schmelzprozessierbare Materialien. Die Klebeigenschaften einer Haftklebemasse hängen u. a. stark vom Vernetzungsgrad des Systems ab, der über den Plateaumodul abschätzbar ist. Nach Dahlquist liegt der Plateaumodul für gute Haftklebemassen zwischen 50 kPa and 200 kPa [D. Satas (Hrsg.), "Handbook of Pressure Sensitive Adhesives Technology, 2. Aufl., 1989, van Nostrand, New York]. Aus dieser Anforderung erkennt man, dass die Haftklebemasse nicht zu stark vernetzt sein darf. Wird diese aber aus gut beschichtbaren, mithin kurzen Polymeren aufgebaut, dann ist der Abstand zwischen zwei Netzpunkten bei Kettenendvemetzung durch den End-zu-End-Abstand der Polymerketten nach oben hin begrenzt, bei statistischer Vernetzung bei Abständen kleiner als der End-zu-End-Abstand der Polymerketten.

In der vorliegenden Erfindung wird ein Konzept und beispielhafte Realisierungsmöglichkeiten dessen für den Aufbau, die Herstellung und die Beschichtung neuartiger Haftklebemassen offenbart. Das erfindungsgemäße Konzept stellt eine neue Möglichkeit dar, mit der die Kombination aus guter Prozessierbarkeit und guten Produkteigenschaften erreicht werden kann. Erfindungsgemäße Haftklebemassen beinhalten zumindest eine funktionalisierte Polymersorte mit einer mittleren Molmasse, so dass eine akzeptable Schmelzviskosität *und* ein für die Produkteigenschaften vorteilhafter Vemetzungszustand erreicht werden.

### Herstellung und Zusammensetzung der erfindungsgemäßen Haftklebemassen

Die erfindungsgemäßen Haftklebemassen bestehen aus zumindest zwei Komponenten, die zu Beginn des Prozesses räumlich getrennt, also beispielsweise in verschiedenen Vorratsbehältern, vorliegen. Diese zumindest zwei Komponenten seien als A-Komponente und B-Komponente bezeichnet. Zu einem Zeitpunkt vor der Beschichtung, der unten genauer definiert wird, werden diese zumindest zwei Komponenten vermischt. Die A-Komponente enthält dabei zumindest einen Bestandteil, der derart ausgerüstet ist, dass er mit zumindest einem Bestandteil der B-Komponente reagieren kann. Eine bevorzugte Auslegung dieser Erfindung ist die Verwendung von zwei Komponenten, aus denen die erfindungsgemäße Haftklebemasse erzeugt wird. Ebenfalls sind auch Gemische, die aus mehr als zwei Komponenten erzeugt werden, erfindungsgemäß.

Zumindest eine der eingesetzten Komponenten enthält zumindest ein Präpolymer auf Basis eines Polyacrylats.

In einer besonders bevorzugten Auslegung enthält die A-Komponente alle Bestandteile, die mit dem zumindest einen Bestandteil der B-Komponente reagieren können aber innerhalb der A-Komponente unter Lagerbedingungen, die unten definiert werden, nicht miteinander reagieren können. In dieser besonders bevorzugten Auslegung enthält die B-Komponente alle Bestandteile, die mit zumindest einem Bestandteil der A-Komponente reagieren können aber innerhalb der B-Komponente unter Lagerbedingungen, die unten definiert werden, nicht reagieren können.

Es ist ferner möglich und erfindungsgemäß, weitere Bestandteile, die mit keinem der Bestandteile aus der A- oder B-Komponente während des Prozessierens reagieren können, dem Gemisch zuzusetzen. Dies kann beispielsweise durch Vermischung mit zumindest einer weiteren Komponente geschehen. Bevorzugt werden diese unter den unten definierten Lagerbedingungen nicht reaktiven Bestandteile der A- und/oder B-Komponente zugesetzt, um die Viskosität und/oder die Vermischungscharakteristik der A- und/oder B-Komponente zwischen den reaktiven Bestandteilen der A- und der B-Komponente zu optimieren und/oder zur gezielten Einstellung der Produkteigenschaften.

Werden Bestandteile verwendet, die unter bestimmten Bedingungen Nebenreaktionen eingehen können, wie beispielsweise eine durch Sonnenlicht induzierte Reaktion oder eine Reaktion mit Luftfeuchtigkeit oder Sauerstoff, dann sind die Vorratsgefäße derart konzipiert, dass solche äußeren Einflüsse soweit ausgeschlossen sind, dass sie für den Einsatzzweck nicht nachteilig in Erscheinung treten. Die Begriffe "Reaktivität" und "reaktiv" beziehen sich im Sinne dieser Erfindung immer auf das Potenzial eines in einer gegebenen Komponente enthaltenen funktionalisierten Bestandteils, mit einem für einen günstigen Ablauf der Reaktion entsprechend ausgerüsteten und in zumindest einer anderen Komponente enthaltenen Bestandteil zu reagieren. Unter "nicht reaktiv" oder "inert" dagegen sei im Sinne dieser Erfindung verstanden, dass sich die Schmelzviskosität einer Komponente im Vorratsbehälter über einen Zeitraum von einem Tag, bevorzugt von einer Woche, mehr bevorzugt von einem Monat nicht um mehr als 20 % des Frischwertes verändert. Die Lagerung der Komponenten erfolgt bis 60 °C, bevorzugt bis 35 °C.

Sind für die gewünschte Kopplungsreaktion zwischen dem zumindest jeweils einen reaktiven Bestandteil aus den zumindest zwei Komponenten weitere Reagenzien, wie z. B. Katalysatoren, Initiatoren, Kopplungsreagenzien oder Vernetzer erforderlich, dann sind diese Reagenzien Bestandteile einer Komponente, die entweder keine oder nur solche weiteren Bestandteile enthält, gegenüber denen diese Reagenzien inert sind.

### Zusammensetzung der A-Komponente

Die A-Komponente besteht aus zumindest einem Bestandteil, der derart funktionalisiert ist, dass er mit zumindest einem Bestandteil in der zumindest einen weiteren Komponente, bevorzugt der B-Komponente, reagieren kann. Die A-Komponente kann ferner einen oder mehrere Bestandteile enthalten, die sich gegenüber allen Bestandteilen in allen weiteren Komponenten chemisch inert verhalten, also nicht reaktiv sind. Die Art der Funktionalisierung hängt von der Wahl des zumindest einen Reaktionspartners in der zumindest einen weiteren Komponente ab. Als funktionalisiert gilt der zumindest eine Bestandteil im Sinne dieser Erfindung, wenn er zumindest zwei Gruppen einer oder verschiedener Art trägt, die sich durch Reaktivität gegenüber dem zumindest einen Bestandteil in der zumindest einen weiteren Komponente auszeichnet. Der auf diese Weise funktionalisierte zumindest eine Bestandteil der A-Komponente kann demnach difunktionalisiert oder multifunktionalisiert vorliegen. Monofunktionalisierte oder nichtfunktionalisierte Bestandteile tragen nicht zum Aufbau des während des Prozessierens entstehenden Netzwerks bei. Bei der Auswahl der reaktiven Bestandteile ist daher auf den Funktionalisierungsgrad zu achten. Ein funktionalisierter Bestandteil der A-Komponente enthält mehr als 80 %, bevorzugt mehr als 90 % an zumindest mit zwei Funktionalisierungen ausgestatteten Moleküle. Dies schließt aber nicht aus, dass der A-Komponente gezielt nicht reaktive Bestandteile insbesondere anderer chemischer Natur in Anteilen von bis zu 80 % zugesetzt werden.

Handelt es sich bei dem zumindest einen funktionalisierten Bestandteil um ein Polymer, dann liegt seine Molmasse zwischen 5 000 g/mol und 200 000 g/mol, bevorzugt zwischen 10 000 g/mol und 100 000 g/mol. Als Molmasse ist in diesem Zusammenhang das Gewichtsmittel der Molmassenverteilung, wie sie beispielsweise über gelpermeationschromatographische Untersuchungen zugänglich ist, zu verstehen. Die Polydispersität der so definierten Systeme, gegeben durch den Quotienten aus Gewichtsmittel und Zahlenmittel der Molmassenverteilung, liegt unter 8, bevorzugt unter 5. Ein Bestandteil, der dieser Beschreibung genügt, wird im folgenden Präpolymer genannt. Ein Präpolymer weist eine Erweichungstemperatur von kleiner als 200 °C auf, bevorzugt kleiner als 100 °C, sehr bevorzugt kleiner als 20°C. Unter Erweichungstemperatur sei in diesem Zusammenhang die dynamische Glasübergangstemperatur für amorphe Systeme und die Schmelztemperatur für semikristalline Systeme verstanden, die durch dynamisch mechanische Analyse (DMA) bei geringen Frequenzen bestimmt werden können (siehe Prüfmethoden, Test D). In der DMA bietet sich hierfür diejenige Temperatur an, bei der die Verlustwinkelkurve ein Maximum aufweist.

Ein lineares Präpolymer kann als Homopolymer (Typ A1), hergestellt aus zumindest einer unfunktionalisierten Monomersorte, als statistisches Copolymer (Typ A2), hergestellt aus zumindest einer unfunktionalisierten Monomersorte und zumindest einer funktionalisierten Monomersorte, oder als Blockcopolymer (Typ A3 oder Typ A4) vorliegen, wobei das Blockcopolymer aus zumindest zwei verschiedenen Homopolymerblöcken (Typ A3), jeweils hergestellt aus zumindest einer unfunktionalisierten Monomersorte, oder aus zumindest einem Block bestehend aus zumindest einem statistischen Copolymerblock, hergestellt aus zumindest einer unfunktionalisierten Monomersorte und zumindest einer funktionalisierten Monomersorte, und optional aus einem oder mehreren Homopolymerblöcken aufgebaut sein kann (Typ A4). Präpolymere vom Typ A1 sind an zumindest zwei Orten entlang der Kette funktionalisiert: z. B. Kettenende 1, Kettenende 2, im Bereich des Mittelpunkts der Kette.

Präpolymere vom Typ A2 bieten mehr Möglichkeiten, zumindest zwei Funktionalisierungen zu tragen: z. B. Kettenende 1, Kettenende 2, im Bereich des Mittelpunkts der Kette, durch Einsatz eines gewünschten Anteils zumindest eines Comonomers, das die Funktionalisierung trägt, an beliebig vielen statistisch entlang der Kette verteilten Punkten. Dabei ist auch jede Kombination dieser Funktionalisierungspunkte erfindungsgemäß. Präpolymere vom Typ A3 sind zumindest an zwei Punkten entlang der Kette funktionalisiert: z. B. Kettenende 1, Kettenende 2, im Bereich des Mittelpunkts der Kette, je nach Anzahl der Blöcke optional einer oder mehrere der Blockverknüpfungspunkte. Präpolymere vom Typ A4 bieten mehr Möglichkeiten, zumindest zwei Funktionalisierungen zu tragen: z. B. Kettenende 1, Kettenende 2, im Bereich des Mittelpunkts der Kette, je nach Anzahl der Blöcke optional einer oder mehrere der Blockverknüpfungspunkte, durch Einsatz eines gewünschten Anteils zumindest eines Comonomers, das die Funktionalisierung trägt, an beliebig vielen statistisch entlang derjenigen Blöcke, die als Copolymerblock aufgebaut sind, verteilten Punkten. Dabei ist auch jede Kombination dieser Funktionalisierungspunkte erfindungsgemäß.

Das Präpolymer kann neben lineare auch von verzweigter, sternförmiger oder gepfropfter Struktur sein. Auch diese Präpolymere können als Typ A1, Typ A2, Typ A3 und Typ A4 aufgebaut sein. Für die Möglichkeiten, die zumindest zwei Funktionalisierungen zu tragen, gibt es neben den oben als Beispiele genannten Punkten je nach Anzahl der Kettenarme in einem sternförmigen oder gepfropften System oder je nach Verzweigungsgrad in verzweigten Polymeren mehr Möglichkeiten der Kettenendfunktionalisierung. So können derartig gestaltete Systeme auch an Verzweigungspunkten, Armverknüpfungspunkten bzw. Pfropfungspunkten funktionalisiert sein. Die verschiedenen Polymerarme in sternförmigen und gepfropften Systemen können von verschiedener chemischer Natur sein, also aus unterschiedlichen Monomeren bestehen oder/und unterschiedliche Comonomerzusammensetzung aufweisen.

Als **Präpolymere vom Typ A1** können alle linearen, sternförmigen, verzweigten und gepfropften Homopolymere, die den zuvor ausgeführten die Molmasse und Erweichungstemperatur betreffenden Definitionen entsprechen, zum Einsatz kommen.

Als Beispiele aber ohne eine Einschränkung vornehmen 70 wollen, seien als vorteilhaft im Sinne dieser Erfindung die folgenden Systeme genannt: Polyether, wie z. B. Polyethylenglykol, Polypropylenglykol oder Polytetrahydrofuran, Polydiene, wie z. B. Polybutadien oder Polyisoprene, hydrierte Polydiene, wie z. B. Polyethylenbutylen oder Polyethylenpropylen, Polyester, wie z. B. Polyethylenterephthalat, Polybutandioladipat oder Polyhexandioladipat, Polycarbonat, Polycaprolacton, Polymere vinylaromatischer Monomere, wie z. B. Polystyrol oder Poly-α-Methylstyrol, Polyalkylvinylether, Polyvinylacetat, Polymere unfunktionalisierter α,β-ungesättigter Ester.

Als Beispiele, aber ohne eine Einschränkung vornehmen zu wollen, seien als vorteilhaft im Sinne dieser Erfindung statistische Copolymere auf Basis α,β-ungesättigter Ester und statistische Copolymere auf Basis von Alkylvinylethem genannt.

Als Monomere für Präpolymere vom Typ A1 sind vorteilhaft prinzipiell alle dem Fachmann geläufigen Verbindungen, die sich zur Synthese von Polymeren eignen, einsetzbar. Bevorzugt werden α,β-ungesättigte Alkylester der allgemeinen Struktur

CH₂=C(R¹)(COOR²) (I)

verwendet, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) für Präpolymere vom Typ A1 eingesetzt werden, umfassen Acryl- und Methacrylsäureester mit Alkylgruppen bestehend aus 1 bis 30 C-Atomen, insbesondere bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearytmethacrylat, deren verzweigte Isomere, wie z.B. 2-Ethylhexylacrylat und iso-Octylacrylat sowie cyclische Monomere wie z.B. Cyclohexyl- oder Norbornylacrylat und Isobornylacrylat.

Ebenfalls einsetzbar als Monomere für Präpolymere vom Typ A1 sind Acryl- und Methacrylsäureester, die aromatische Reste enthalten, wie z. B. Phenylacrylat, Benzylacrylat, Phenylmethacrylat oder Benzylmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

Neben linearen Systemen sind solche, die als dreiarmiges, vierarmiges oder vielarmiges Sternpolymer gestaltet sind, ebenso bevorzugte Vertreter der Präpolymere vom Typ A1.

Die in den Präpolymeren vom Typ A1 enthaltenen zumindest zwei Funktionalisierungen sind so ausgestaltet, dass sie gegenüber zumindest einem Bestandteil in der zumindest einen weiteren Komponente reaktiv sind. Beispiele für funktionelle Gruppen sind im Abschnitt "Kombinationen von funktionellen Segmenten" beschrieben.

Als **Präpolymere vom Typ A2** können alle linearen, sternförmigen, verzweigten oder gepfropften statistischen Copolymere, die den zuvor ausgeführten die Molmasse und Erweichungstemperatur betreffenden Definitionen entsprechen, zum Einsatz kommen. Präpolymere vom Typ A2 werden aus zumindest einer unfunktionalisierten Monomersorte und zumindest einer funktionalisierten Monomersorte hergestellt.

Als Beispiele, aber ohne eine Einschränkung vornehmen zu wollen, seien als vorteilhaft im Sinne dieser Erfindung statistische Copolymere ausgehend von unfunktionalisierten α,β-ungesättigter Estern und statistische Copolymere ausgehend von unfunktionalisierten Alkylvinylethem genannt.

Als Monomere für Präpolymere vom Typ A2 sind vorteilhaft prinzipiell alle dem Fachmann geläufigen Verbindungen, die sich zur Synthese von Polymeren eignen, einsetzbar. Bevorzugt werden α,β-ungesättigte Alkylester der allgemeinen Struktur

CH₂=C(R¹)(COOR²) (I)

verwendet, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) für Präpolymere vom Typ A2 eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und iso-Octylacrylat sowie cyclische Monomere wie z.B. Cyclohexyl- oder Norbornylacrylat und Isobornylacrylat.

Ebenfalls einsetzbar als Monomere für Präpolymere vom Typ A2 sind Acryl- und Methacrylsäureester, die aromatische Reste enthalten, wie z. B. Phenylacrylat, Benzylacrylat, Benzoinacrylat, Phenylmethacrylat, Benzylmethacrylat oder Benzoinmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

In einer bevorzugten Auslegungsform dieser Erfindung enthalten Präpolymere vom Typ A2 ihre zumindest zwei Funktionalisierungen in Form zumindest eines speziellen Comonomers, das während der Polymerisation des Präpolymers statistisch copolymerisiert wurde. Dabei liegt der Stoffmengenanteil dieses zumindest einen speziellen Comonomers in Bezug auf die Zusammensetzung des Gesamtmonomergemischs bei der Herstellung des Gesamtpolymers bei bis zu 20 %, bevorzugt bei bis zu 10 %, sehr bevorzugt bei bis zu 5 %. Der spezielle Charakter dieses zumindest einen Comonomers zeigt sich darin, dass es derart funktionalisiert ist, dass es gegenüber zumindest einem Bestandteil in der zumindest einen weiteren Komponente reaktiv ist. Beispiele für funktionelle Gruppen sind im Abschnitt "Kombinationen funktioneller Segmente" beschrieben. Besonders bevorzugt sind Monomere auf Basis von α-β-ungesättigten Estern, die diese Funktionalisierung enthalten.

**Präpolymere vom Typ A3** sind derart aufgebaut, dass einzelne Polymerblöcke miteinander kovalent verknüpft sind. Jeder der einzelnen Blöcke erfüllt die oben genannten Definitionen in Bezug auf Erweichungstemperatur und Molmasse. Die Blockverknüpfung kann in einer linearen Form vorliegen, aber auch in einer sternförmigen Ausführung oder als Pfropfcopolymervariante. Im einfachsten Fall ist das Präpolymer vom Typ A3 ein Diblockcopolymer der Art Block 1-Block 2 bestehend aus einem Block 1 und einem Block 2, die sich in Bezug auf die ausgewählten Ausgangsmonomere unterscheiden und optional in ihrer Erweichungstemperatur und/oder Molmasse und/oder Struktur (z. B. linearer oder verzweigter Art) verschieden sein können. Weitere Ausführungsformen der Präpolymere vom Typ A3 sind, ohne sich einschränken zu wollen, Triblockoopolymere der Art Block 1'-Block 2'-Block 3', Blockcopolymere der Art Block 1"-Block 2"-Block 3"-Block 4" sowie höhere Blockcopolymere, deren Strukturen diese Reihe fortführen. Triblockcopolymere und höhere Blockcopolymere sind dann erfindungsgemäß im Sinne der Präpolymere vom Typ A3, wenn sich alle direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) unterscheiden. Ferner sind Triblockcopolymere und höhere Blockcopolymere erfindungsgemäß im Sinne der Präpolymere vom Typ A3, wenn sich mehrere der nicht direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) nicht voneinander unterscheiden. Eine bevorzugte Auslegung eines Präpolymers vom Typ A3 ist ein Triblockcopolymer der Art Block 1'-Block 2'-Block 3', wobei Block 1' und Block 3' in Bezug auf die ausgewählten Ausgangsmonomere, Molmasse, Erweichungstemperatur und Struktur gleich sind.

Beispiele für in den Präpolymeren vom Typ A3 enthaltenen Blöcken sind Polyether, wie z. B. Polyethylenglykol, Polypropylenglykol oder Polytetrahydrofuran, Polydiene, wie z. B. Polybutadien oder Polyisoprene, hydrierte Polydiene, wie z. B. Polyethylenbutylen oder Polyethylenpropylen, Polyester, wie z. B. Polyethylenterephthalat, Polybutandioladipat oder Polyhexandioladipat, Polycarbonat, Polycaprolacton, Polymere vinylaromatischer Monomere, wie z. B. Polystyrol oder Poly-α-Methylstyrol, Polyalkylvinylether, Polyvinylacetat, Polymere unfunktionalisierter α,β-ungesättigter Ester

Als Beispiele, aber ohne eine Einschränkung vornehmen zu wollen, seien als vorteilhaft im Sinne dieser Erfindung statistische Copolymere auf Basis α,β-ungesättigter Ester und statistische Copolymere auf Basis von Alkylvinylethern genannt

Als Monomere für Präpolymere vom Typ A3 sind vorteilhaft prinzipiell alle dem Fachmann geläufigen Verbindungen, die sich zur Synthese von Polymeren eignen, einsetzbar. Bevorzugt werden α,β-ungesättigte Alkylester der allgemeinen Struktur

CH₂=C(R¹)(COOR²) (I)

verwendet, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) für Präpolymere vom Typ A3 eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und iso-Octylacrylat sowie cyclische Monomere wie z.B. Cyclohexyl- oder Norbornylacrylat und Isobornylacrylat.

Ebenfalls einsetzbar als Monomere für Präpolymere vom Typ A3 sind Acryl- und Methacrylsäureester, die aromatische Reste enthalten, wie z. B. Phenylacrylat, Benzylacrylat, Phenylmethacrylat oder Benzylmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heteroryklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

Die in den Präpolymeren vom Typ A3 einsetzbaren zumindest zwei Funktionalisierungen sind so ausgestaltet, dass sie gegenüber zumindest einem Bestandteil in der zumindest einen weiteren Komponente reaktiv sind. Beispiele für funktionelle Gruppen sind im Abschnitt "Kombinationen funktioneller Segmente" beschrieben.

**Präpolymere vom Typ A4** sind derart aufgebaut, dass einzelne Polymerblöcke miteinander kovalent verknüpft sind. Jeder der einzelnen Blöcke erfüllt die oben genannten Definitionen in Bezug auf Erweichungstemperatur und Molmasse. Die Blockverknüpfung kann in einer linearen Form geschehen, aber auch in einer sternförmigen Ausführung oder als Pfropfcopolymervariante. Präpolymere vom Typ A4 unterscheiden sich von Präpolymeren vom Typ A3 darin, dass zumindest ein Block als statistisches Copolymer aus zumindest zwei Comonomeren aufgebaut ist. Im einfachsten Fall ist das Präpolymer vom Typ A4 ein Diblockcopolymer der Art Block 1'''-Block 2''' bestehend aus einem Block 1''' und einem Block 2"', die sich in Bezug auf die Comonomerusammensetrung unterscheiden und optional in ihrer Molmasse und/oder Erweichungstempertur und/oder Struktur (z. B. linearer oder verzweigter Art) verschieden sein können. Weitere Ausführungsformen der Präpolymere vom Typ A4 sind, ohne sich einschränken zu wollen, Triblockcopolymere der Art Block 1""-Block 2""-Block 3"", Blockcopolymere der Art Block 1"'"-Block 2""'-Block 3""'-Block 4""' sowie höhere Blockcopolymere, deren Strukturen diese Reihe fortführen. Triblockcopolymere und höhere Blockcopolymere sind dann erfindungsgemäß im Sinne der Präpolymere vom Typ A4, wenn sich alle direkt miteinander verknüpften Blöcke in Bezug auf die Comonomerzusammensetzung und/oder Wahl der Ausgangsmonomere sowie optional in ihrer Molmasse und/oder Erweichungstemperatur und/oder Struktur (z. B. linearer oder verzweigter Art) unterscheiden. Ferner sind Triblockcopolymere und höhere Blockcopolymere erfindungsgemäß im Sinne der Präpolymere vom Typ A4, wenn sich mehrere der nicht direkt miteinander verknüpften Blöcke in Bezug auf die Comonomerzusammensetzung und/oder Wahl der Ausgangsmonomere sowie optional in ihrer Molmasse und/oder Erweichungstemperatur und/oder Struktur (z. B. linearer oder verzweigter Art) nicht voneinander unterscheiden. Eine bevorzugte Auslegung eines Präpolymers vom Typ A4 ist ein Triblockcopolymer der Art Block 1""-Block 2""-Block 3"", wobei Block 1"" und Block 3'"' in Bezug auf die ausgewählten Ausgangsmonomere, Molmasse, Erweichungstemperatur und Struktur gleich sind.

Für die Wahl der Ausgangsmonomere der einzelnen in den erfindungsgemäßen Präpolymeren vom Typ A4 vorkommenden Blöcke können beispielsweise, ohne sich durch diese Aufzählung einschränken zu wollen, all jene Monomere Einsatz finden, die auch als Ausgangsmonomere für Präpolymere vom Typ A2 verwendet werden können.

Zudem ist es erfindungsgemäß, für den Aufbau der Präpolymere vom Typ A4 Blöcke aus der Gruppe der für die Präpolymere vom Typ A3 einsetzbaren Arten zu wählen.

In einer bevorzugten Auslegungsform dieser Erfindung enthalten Präpolymere vom Typ A4 ihre zumindest zwei Funktionalisierungen in Form zumindest eines speziellen Comonomers, das in zumindest einem Block statistisch verteilt enthalten ist. Dabei liegt der Stoffmengenanteil dieses zumindest einen speziellen Comonomers in Bezug auf die Zusammensetzung des Gesamtpolymers bei bis zu 20 %, bevorzugt bei bis zu 10 %, sehr bevorzugt bei bis zu 5 %. Der spezielle Charakter dieses zumindest einen Comonomers zeigt sich darin, dass es derart funktionalisiert ist, dass es gegenüber zumindest einem Bestandteil in der zumindest einen weiteren Komponente reaktiv ist. Beispiele für funktionelle Gruppen sind im Abschnitt "Kombinationen funktioneller Segmente" beschrieben. Besonders bevorzugt sind Monomere auf Basis von α,β-ungesättigten Estern, die diese Funktionalisierung enthalten.

Die A-Komponente enthält zumindest einen Bestandteil vom Typ A1, Typ A2, Typ A3 oder Typ A4. Eine A-Komponente ist ebenfalls dann erfindungsgemäß, wenn sie Bestandteile verschiedener Typen (A1, A2, A3, A4) enthält.

Es ist außerdem erfindungsgemäß, optional unfunktionalisierte und/oder monofunktionalisierte Polymere und/oder unfunktionalisierte und/oder monofunktionalisierte Blockcopolymere als Bestandteile in der A-Komponente einzusetzen. Für die Zusammensetzung der unfunktionalisierten Polymere, die optional als Bestandteil in der A-Komponente eingesetzt werden können, gelten die gleichen Angaben hinsichtlich Aufbau, Zusammensetzung, Wahl der Monomere, Erweichungstemperatur und Struktur wie sie in der Definition für Präpolymere vom Typ A1 und Typ A2 zu finden sind. Das Gewichtsmittel ihrer Molmassenverteilung liegt bei kleiner 1 000 000 g/mol, bevorzugt bei kleiner 100 000 g/mol. Ihre Erweichungstemperatur liegt bei kleiner 200 °C, bevorzugt bei kleiner 100 °C, mehr bevorzugt bei kleiner 20 °C. Für monofunktionalisierte Polymere, die optional als Bestandteile in der A-Komponente eingesetzt werden können, gelten die Angaben, die für unfunktionalisierte Polymere, die optional als Bestandteile in der A-Komponente eingesetzt werden können, gemacht wurden. Sie enthalten aber zusätzlich eine Funktionalisierung, die mit zumindest einem Bestandteil in der zumindest einen weiteren Komponente reaktiv ist.

Für die Zusammensetzung der unfunktionalisierten Blockcopolymere, die optional als Bestandteil in der A-Komponente eingesetzt werden können, gelten die gleichen Angaben hinsichtlich Aufbau, Zusammensetzung, Wahl der Monomere, Erweichungstemperatur und Struktur, wie sie in der Definition für Präpolymere vom Typ A3 und Typ A4 zu finden sind. Das Gewichtsmittel ihrer Molmassenverteilung liegt bei kleiner 1 000 000 g/mol, bevorzugt bei kleiner 250 000 g/mol. Für monofunktionalisierte Blockcopolymere, die optional als Bestandteile in der A-Komponente eingesetzt werden können, gelten die Angaben, die für unfunktionalisierte Blockcopolymere, die optional als Bestandteile in der A-Komponente eingesetzt werden können, gemacht wurden. Sie enthalten aber zusätzlich eine Funktionalisierung, die mit zumindest einem Bestandteil in der zumindest einen weiteren Komponente reaktiv ist.

Ein monofunktionalisierter Bestandteil der A-Komponente enthält mehr als 80 %, bevorzugt mehr als 90 % an mit einer Funktionalisierung ausgestatteter Moleküle.

Als weitere Bestandteile kann die A-Komponente Klebharze, Weichmacher, rheologisch wirksame Additive, Katalysatoren, Stabilisatoren, Kompatibilisatoren, Kopplungsreagenzien, Antioxidantien, weitere Alterungsschutzmittel, Lichtschutzmittel, Flammschutzmittel, Pigmente, Farbstoffe, Füllstoffe und/oder Blähmittel enthalten. Diese weiteren optional in der A-Komponente einsetzbaren Bestandteile zeichnen sich dadurch aus, dass sie gegenüber allen anderen Bestandteilen der A-Komponente unter den oben definierten Lagerbedingungen nicht reaktiv sind. Sofern mehrere dieser optional in der A-Komponente einsetzbaren Bestandteile Anwendung finden, sind diese auch untereinander unter den oben definierten Lagerbedingungen nicht reaktiv.

### Zusammensetzung der B-Komponente

Die B-Komponente besteht aus zumindest einem Bestandteil, der derart funktionalisiert ist, dass er mit zumindest einem Bestandteil in der zumindest einen weiteren Komponente, beispielsweise der A-Komponente, reagieren kann. Die B-Komponente kann ferner einen oder mehrere Bestandteile enthalten, die sich gegenüber allen Bestandteilen in allen weiteren Komponenten chemisch inert verhalten, also nicht reaktiv sind. Die Art der Funktionalisierung hängt von der Wahl des zumindest einen Reaktionspartners in der zumindest einen weiteren Komponente ab. Als funktionalisiert gilt der zumindest eine Bestandteil im Sinne dieser Erfindung, wenn er zumindest zwei Gruppen einer oder verschiedener Art trägt, die sich durch Reaktivität gegenüber dem zumindest einen Bestandteil in der zumindest einen weiteren Komponente auszeichnen. Der auf diese Weise funktionalisierte zumindest eine Bestandteil der B-Komponente kann demnach difunktionalisiert oder multifunktionalisiert vorliegen. Monofunktionalisierte oder nichtfunktionalisierte Bestandteile tragen nicht zum Aufbau des während des Prozessierens entstehenden Netzwerks bei. Bei der Auswahl der reaktiven Bestandteile ist daher auf den Funktionalisierungsgrad zu achten. Ein funktionalisierter Bestandteil der B-Komponente enthält mehr als 80 %, bevorzugt mehr als 90 % an zumindest mit zwei Funktionalisierungen ausgestatteten Moleküle. Dies schließt aber nicht aus, dass der B-Komponente gezielt nicht reaktive Bestandteile insbesondere anderer chemischer Natur zugesetzt werden.

Handelt es sich bei dem zumindest einen funktionalisierten Bestandteil um ein Polymer, dann liegt das Gewichtsmittel seiner Molmassenverteilung bei kleiner 300 000 g/mol, bevorzugt bei kleiner 100 000 g/mol, sehr bevorzugt bei kleiner 25 000 g/mol. Die Polydispersität der so definierten Systeme, gegeben durch den Quotienten aus Gewichtsmittel und Zahlenmittel der Molmassenverteilung, liegt unter 8, bevorzugt unter 5. Ein Präpolymer dieser Art weist eine Erweichungstemperatur von kleiner als 200 °C auf, bevorzugt kleiner als 100 °C, sehr bevorzugt kleiner als 20 °C.

Ein lineares Präpolymer kann als Homopolymer (Typ B1), hergestellt aus zumindest einer unfunktionalisierten Monomersorte, als statistisches Copolymer (Typ B2), hergestellt aus zumindest einer unfunktionalisierten Monomersorte und zumindest einer funktionalisierten Monomersorte, oder als Blockcopolymer (Typ B3 oder Typ B4) vorliegen, wobei das Blockcopolymer aus zumindest zwei verschiedenen Homopolymerblöcken (Typ B3), jeweils hergestellt aus zumindest einer unfunktionalisierten Monomersorte, oder aus zumindest einem Block hergestellt aus zumindest einem statistischen Copolymerblock, bestehend aus zumindest einer unfunktionalisierten Monomersorte und zumindest einer funktionalisierten Monomersorte, und optional aus einem oder mehreren Homopolymerblöcken aufgebaut sein kann (Typ B4). Präpolymere vom Typ B1 sind an zumindest zwei Punkten entlang der Kette funktionalisiert: z. B. Kettenende 1, Kettenende 2, im Bereich des Mittelpunkts der Kette. Präpolymere vom Typ B2 bieten mehr Möglichkeiten, zumindest zwei Funktionalisierungen zu tragen: z. B. Kettenende 1, Kettenende 2, im Bereich des Mittelpunkts der Kette, durch Einsatz eines gewünschten Anteils zumindest eines Comonomers, das die Funktionalisierung trägt, an beliebig vielen statistisch entlang der Kette verteilten Punkten. Dabei ist auch jede Kombination dieser Funktionalisierungspunkte erfindungsgemäß. Präpolymere vom Typ B3 sind zumindest an zwei Punkten entlang der Kette funktionalisiert: z. B. Kettenende 1, Kettenende 2, im Bereich des Mittelpunkts der Kette, je nach Anzahl der Blöcke optional einer oder mehrere der Blockverknüpfungspunkte. Präpolymere vom Typ B4 bieten mehr Möglichkeiten, zumindest zwei Funktionalisierungen zu tragen: z. B. Kettenende 1, Kettenende 2, im Bereich des Mittelpunkts der Kette, je nach Anzahl der Blöcke optional einer oder mehrere der Blockverknüpfungspunkte, durch Einsatz eines gewünschten Anteils zumindest eines Comonomers, das die Funktionalisierung trägt, an beliebig vielen statistisch entlang derjenigen Blöcke, die als Copolymerblock aufgebaut sind, verteilten Punkten. Dabei ist auch jede Kombination dieser Funktionalisierungspunkte erfindungsgemäß.

Das Präpolymer kann von linearer, verzweigter, sternförmiger oder gepfropfter Struktur sein. Auch diese Präpolymere können als Typ B1, Typ B2, Typ B3 und Typ B4 aufgebaut sein. Für die Möglichkeiten, die zumindest zwei Funktionalisierungen zu tragen, gibt es neben den oben als Beispiele genannten Punkten je nach Anzahl der Kettenarme in einem sternförmigen oder gepfropften System oder je nach Verzweigungsgrad in verzweigten Polymeren mehr Möglichkeiten der Kettenendfunktionalisierung. So können derartig gestaltete Systeme auch an Verzweigungspunkten, Armverknüpfungspunkten bzw. Pfropfungspunkten funktionalisiert sein. Die verschiedenen Polymerarme in sternförmigen und gepfropften Systemen können von unterschiedlicher chemischer Natur sein, also aus unterschiedlichen Monomeren bestehen und/oder unterschiedliche Comonomerzusammensetzung aufweisen.

Ferner kann die B-Komponente auch Bestandteile vom Typ B5 enthalten. Typ B5 umfasst niedermolekulare funktionalisierte Verbindungen.

Als **Präpolymere vom Typ B1** können alle linearen, sternförmigen, verzweigten und gepfopften Homopolymere, die den zuvor ausgeführten die Molmasse und Erweichungstemperatur betreffenden Definitionen entsprechen, zum Einsatz kommen.

Als Beispiele, aber ohne eine Einschränkung vornehmen zu wollen, seien als vorteilhaft im Sinne dieser Erfindung die folgenden Systeme genannt: Polyether, wie z. B. Polyethylenglykol, Polypropylenglykol oder Polytetrahydrofuran, Polydiene, wie z. B. Polybutadien oder Polyisoprene, hydrierte Polydiene, wie z. B. Polyethylenbutylen oder Polyethylenpropylen, Polyester, wie z. B. Polyethylenterephthalat, Polybutandioladipat oder Polyhexandioladipat, Polycarbonat, Polycaprolacton, Polymere vinylaromatischer Monomere, wie z. B. Polystyrol oder Poly-α-Methylstyrol, Polyalkylvinylether, Polyvinylacetat, Polymere unfunktionalisierter α,β-ungesättigter Ester.

Als Beispiele, aber ohne eine Einschränkung vornehmen zu wollen, seien als vorteilhaft im Sinne dieser Erfindung statistische Copolymere auf Basis α,β-ungesättigter Ester und statistische Copolymere auf Basis von Alkylvinylethern genannt

Als Monomere für Präpolymere vom Typ B1 sind vorteilhaft prinzipiell alle dem Fachmann geläufigen Verbindungen, die sich zur Synthese von Polymeren eignen, einsetzbar. Bevorzugt werden α,β-ungesättigte Alkylester der allgemeinen Struktur

CH₂=C(R¹)(COOR²) (I)

verwendet, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) für Präpolymere vom Typ B1 eingesetzt werden, umfassen Acryl- und Methacrylsäureester mit Alkylgruppen bestehend aus 1 bis 30 C-Atomen, insbesondere bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptytacrylat, n-Octylacrylat, n-Nonyacrylat, Laurylacrylat, Stearylacrylat, Stearylmethacrylat, deren verzweigte Isomere, wie z.B. 2-Ethylhexylacrylat und iso-Octylacrylat sowie cyclische Monomere wie z.B. Cyclohexyl- oder Norbornylacrylat und Isobornylacrylat.

Ebenfalls einsetzbar als Monomere für Präpolymere vom Typ B1 sind Acryl- und Methacrylsäureester, die aromatische Reste enthalten, wie z. B. Phenylacrylat, Benzylacrylat, Phenylmethacrylat oder Benzylmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

Neben linearen Systemen sind solche, die als dreiarmiges, vierarmiges oder vielarmiges Sternpolymer gestaltet sind, ebenso bevorzugte Vertreter der Präpolymere vom Typ B1.

Die in den Präpolymeren vom Typ B1 enthaltenen zumindest zwei Funktionalisierungen sind so ausgestaltet, dass sie gegenüber zumindest einem Bestandteil in der zumindest einen weiteren Komponente reaktiv sind. Beispiele für funktionelle Gruppen sind im Abschnitt "Kombinationen für funktionelle Segmente" beschrieben.

Als **Präpolymere vom Typ B2** können alle linearen, sternförmigen, verzweigten und gepfropften statistischen Copolymere, die den zuvor ausgeführten die Molmasse und Erweichungstemperatur betreffenden Definitionen entsprechen, zum Einsatz kommen. Präpolymere vom Typ B2 werden aus zumindest einer unfunktionalisierten Monomersorte und zumindest einer funktionalisierten Monomersorte hergestellt.

Als Beispiele, aber ohne eine Einschränkung vornehmen zu wollen, seien als vorteilhaft im Sinne dieser Erfindung statistische Copolymere ausgehend von α,β-ungesättigten Estern und statistische Copolymere ausgehend von Alkylvinylethern genannt.

Als Monomere für Präpolymere vom Typ B2 sind vorteilhaft prinzipiell alle dem Fachmann geläufigen Verbindungen, die sich zur Synthese von Polymeren eignen, einsetzbar. Bevorzugt werden α,β-ungesättigte Alkylester der allgemeinen Struktur (I) verwendet, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) für Präpolymere vom Typ B2 eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und iso-Octylacrylat sowie cyclische Monomere wie z.B. Cyclohexyl- oder Norbornylacrylat und Isobornylacrylat.

Ebenfalls einsetzbar als Monomere für Präpolymere vom Typ B2 sind Acryl- und Methacrylsäureester, die aromatische Reste enthalten, wie z. B. Phenylacrylat, Benzylacrylat, Benzoinacrylat, Phenylmethacrylat, Benzylmethacrylat oder Benzoinmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

In einer bevorzugten Auslegungsform dieser Erfindung enthalten Präpolymere vom Typ B2 ihre zumindest zwei Funktionalisierungen in Form zumindest eines speziellen Comonomers, das während der Polymerisation des Präpolymers statistisch copolymerisiert wurde. Dabei liegt der Stoffmengenanteil dieses zumindest einen speziellen Comonomers in Bezug auf die Zusammensetzung des Gesamtmonomergemischs bei der Herstellung des Gesamtpolymers bei bis zu 20 %, bevorzugt bei bis zu 10 %, sehr bevorzugt bei bis zu 5 %. Der spezielle Charakter dieses zumindest einen Comonomers zeigt sich darin, dass es derart funktionalisiert ist, dass es gegenüber zumindest einem Bestandteil in der zumindest einen weiteren Komponente reaktiv ist. Beispiele für funktionelle Gruppen sind im Abschnitt "Kombinationen funktioneller Segmente" beschrieben. Besonders bevorzugt sind Monomere auf Basis α,β-ungesättigter Ester, die diese Funktionalisierung enthalten.

**Präpolymere vom Typ B3** sind derart aufgebaut, dass einzelne Polymerblöcke miteinander kovalent verknüpft sind. Jeder der einzelnen Blöcke erfüllt die oben genannten Definitionen in Bezug auf Erweichungstemperatur und Molmasse. Die Blockverknüpfung kann in einer linearen Form vorliegen, aber auch in einer sternförmigen Ausführung oder als Pfropfoopolymervarlante. Im einfachsten Fall ist das Präpolymer vom Typ B3 ein Diblockcopolymer der Art Block 1*-Block 2* bestehend aus einem Block 1* und einem Block 2*, die sich in Bezug auf die ausgewählten Ausgangsmonomere unterscheiden und optional in ihrer Erweichungstemperatur und/oder Molmasse und/oder Struktur (z. B. linearer oder verzweigter Art) verschieden sein können. Weitere Ausführungsformen der Präpolymere vom Typ B3 sind, ohne sich einschränken zu wollen, Triblockcopolymere der Art Block 1**-Block 2**-Block 3**, Blockcopolymere der Art Block 1***-Block 2***-Block 3***-Block 4*** sowie höhere Blockcopolymere, deren Strukturen diese Reihe fortführen. Triblockcopolymere und höhere Blockcopolymere sind dann erfindungsgemäß im Sinne der Präpolymere vom Typ B3, wenn sich alle direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) unterscheiden. Ferner sind Triblockcopolymere und höhere Blockcopolymere erfindungsgemäß im Sinne der Präpolymere vom Typ B3, wenn sich mehrere der nicht direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) nicht voneinander unterscheiden. Eine bevorzugte Auslegung eines Präpolymers vom Typ B3 ist ein Triblockcopolymer der Art Block 1**-Block 2**-Block 3**, wobei Block 1** und Block 3** in Bezug auf die ausgewählten Ausgangsmonomere, Molmasse, Erweichungstemperatur und Struktur gleich sind.

Beispiele für in den Präpolymeren vom Typ B3 enthaltenen Blöcken sind Polyether, wie z. B. Polyethylenglykol, Polypropylenglykol oder Polytetrahydrofuran, Polydiene, wie z. B. Polybutadien oder Polyisopren, hydrierte Polydiene, wie z. B. Polyethylenbutylen oder Polyethylenpropylen, Polyester, wie z. B. Polyethylenterephthalat, Polybutandioladipat oder Polyhexandioladipat, Polycarbonat, Polycaprolacton, Polymere vinylaromatischer Monomere, wie z. B. Polystyrol oder Poly-α-Methylstyrol, Polyalkylvinylether, Polyvinylacetat, Polymere unfunktionalisierter α,β-ungesättigter Ester.

Als Beispiele, aber ohne eine Einschränkung vornehmen zu wollen, seien als vorteilhaft im Sinne dieser Erfindung statistische Copolymere auf Basis α,β-ungesättigter Ester und statistische Copolymere auf Basis von Alkylvinylethern genannt.

Als Monomere für Präpolymere vom Typ B3 sind vorteilhaft prinzipiell alle dem Fachmann geläufigen Verbindungen, die sich zur Synthese von Polymeren eignen, einsetzbar. Bevorzugt werden α,β-ungesättigte Alkylester der allgemeinen Struktur

CH₂=C(R¹)(COOR²) (I)

verwendet, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) für Präpolymere vom Typ B3 eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und iso-Octylacrylat sowie cyclische Monomere wie z.B. Cyclohexyl- oder Norbornylacrylat und Isobornylacrylat.

Ebenfalls einsetzbar als Monomere für Präpolymere vom Typ B3 sind Acryl- und Methacrylsäureester, die aromatische Reste enthalten, wie z. B. Phenylacrylat, Benzylacrylat, Phenylmethacrylat oder Benzylmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

Neben linearen Systemen sind solche, die als dreiarmiges, vierarmiges oder vielarmiges Sternpolymer gestaltet sind, ebenso bevorzugte Vertreter der Präpolymere vom Typ B3.

Die in den Präpolymeren vom Typ B3 enthaltenen zumindest zwei Funktionalisierungen sind so ausgestaltet, dass sie gegenüber zumindest einem Bestandteil in der zumindest einen weiteren Komponente reaktiv sind. Beispiele für funktionelle Gruppen sind im Abschnitt "Kombinationen funktioneller Segmente" beschrieben.

**Präpolymere vom Typ B4** sind derart aufgebaut, dass einzelne Polymerblöcke miteinander kovalent verknüpft sind. Jeder der einzelnen Blöcke erfüllt die oben genannten Definitionen in Bezug auf Erweichungstemperatur und Molmasse. Die Blockverknüpfung kann in einer linearen Form geschehen, aber auch in einer sternförmigen Ausführung oder als Pfropfcopolymervariante. Präpolymere vom Typ 84 unterscheiden sich von Präpolymeren vom Typ B3 darin, dass zumindest ein Block als statistisches Copolymer aus zumindest zwei Comonomeren aufgebaut ist. Im einfachsten Fall ist das Präpolymer vom Typ B4 ein Diblockcopolymer der Art Block 1****-Block 2**** bestehend aus einem Block 1**** und einem Block 2****, die sich in Bezug auf die Comonomerzusammensetzung unterscheiden und optional in ihrer Molmasse und/oder Erweichungstemperatur und/oder Struktur (z. B. linearer oder verzweigter Art) verschieden sein können. Weitere Ausführungsformen der Präpolymere vom Typ B3 sind, ohne sich einschränken zu wollen, Triblockcopolymere der Art Block 1*****-Block 2*****-Block 3*****, Blockcopolymere der Art Block 1******-Block 2******-Block 3******-Block 4****** sowie höhere Blockcopolymere, deren Strukturen diese Reihe fortführen. Triblockcopolymere und höhere Blockcopolymere sind dann erfindungsgemäß im Sinne der Präpolymere vom Typ B4, wenn sich alle direkt miteinander verknüpften Blöcke in Bezug auf die Comonomerzusammensetzung und/oder Wahl der Ausgangsmonomere sowie optional in ihrer Molmasse und/oder Erweichungstemperatur und/oder Struktur (z. B. linearer oder verzweigter Art) unterscheiden. Ferner sind Triblockcopolymere und höhere Blockcopolymere erfindungsgemäß im Sinne der Präpolymere vom Typ B4, wenn sich mehrere der nicht direkt miteinander verknüpften Blöcke in Bezug auf die Comonomerzusammensetzung und/oder Wahl der Ausgangsmonomere sowie optional in ihrer Molmasse und/oder Erweichungstemperatur und/oder Struktur (z. B. linearer oder verzweigter Art) nicht voneinander unterscheiden. Eine bevorzugte Auslegung eines Präpolymers vom Typ B3 ist ein Triblockcopolymer der Art Block 1*****-Block 2*****-Block 3*****, wobei Block 1***** und Block 3***** in Bezug auf die ausgewählten Ausgangsmonomere, Molmasse, Erweichungstemperatur und Struktur gleich sind.

Für die Wahl der Ausgangsmonomere der einzelnen in den erfindungsgemäßen Präpolymeren vom Typ B4 vorkommenden Blöcke können beispielsweise, ohne sich durch diese Aufzählung einschränken zu wollen, all jene Monomere Einsatz finden, die auch als Ausgangsmonomere für Präpolymere vom Typ B2 verwendet werden können.

Zudem ist es erfindungsgemäß, für den Aufbau der Präpolymere vom Typ B4 Blöcke aus der Gruppe der für die Präpolymere vom Typ B3 einsetzbaren Arten zu wählen.

In einer bevorzugten Auslegungsform dieser Erfindung enthalten Präpolymere vom Typ B4 ihre zumindest zwei Funktionalisierungen in Form zumindest eines speziellen Comonomers, das in zumindest einem Block statistisch verteilt enthalten ist. Dabei liegt der Stoffmengenanteil dieses zumindest einen speziellen Comonomers in Bezug auf die Zusammensetzung des Gesamtpolymers bei bis zu 20 %, bevorzugt bei bis zu 10 %, sehr bevorzugt bei bis zu 5 %. Der spezielle Charakter dieses zumindest einen Comonomers zeigt sich darin, dass es derart funktionalisiert ist, dass es gegenüber zumindest einem Bestandteil in der zumindest einen weiteren Komponente reaktiv ist. Beispiele für funktionelle Gruppen sind im Abschnitt "Kombinationen funktioneller Segmente" beschrieben.

Die B-Komponente kann vorteilhafterweise im Sinne dieser Erfindung auch und auch ausschließlich niedermolekulare funktionalisierte Verbindungen vom Typ B5 enthalten, insbesondere dann, wenn zumindest ein Bestandteil in zumindest einer weiteren Komponente ein funktionalisiertes Präpolymer ist. Die Molmasse dieser Verbindung vom Typ B5 ist kleiner als 5000 g/mol, bevorzugt kleiner als 2500 g/mol, sehr bevorzugt kleiner als 1000 g/mol. Der Funktionalisierungsgrad für diese Verbindung, um erfindungsgemäß zu sein, liegt bei mindestens zwei. Die funktionalisierte Substanz enthält zu mehr als 80 % diese zumindest zwei Funktionalisierungen, bevorzugt zu mehr als 90 %.

Es ist ebenfalls erfindungsgemäß, ein Gemisch aus Verbindungen unterschiedlichen Funktionalsierungsgrads, insbesondere solcher mit Difunktionalität und Trifunktionalität, als Komponente B5 einzusetzen.

Die B-Komponente enthält zumindest ein Material vom Typ B1, Typ B2, Typ B3, Typ B4 oder Typ B5. Eine B-Komponente ist ebenfalls dann erfindungsgemäß, wenn sie Materialien verschiedener Typen (B1, B2, B3, B4, B5) enthält.

Es ist außerdem erfindungsgemäß, optional unfunktionalisierte und/oder monofunktionalisierte Polymere und/oder unfunktionalisierte und/oder monofunktionalisierte Blockcopolymere als Bestandteile in der B-Komponente einzusetzen. Für die Zusammensetzung der unfunktionalisierten Polymere, die optional als Bestandteil in der B-Komponente eingesetzt werden können, gelten die gleichen Angaben hinsichtlich Aufbau, Zusammensetzung, Wahl der Monomere, Erweichungstemperatur und Struktur, wie sie in der Definition für Präpolymere vom Typ B1 und Typ B2 zu finden sind. Das Gewichtsmittel ihrer Molmassenverteilung liegt bei kleiner 1 000 000 g/mol, bevorzugt bei kleiner 100 000 g/mol. Ihre Erweichungstemperatur liegt bei kleiner 200 °C, bevorzugt bei kleiner 100 °C, mehr bevorzugt bei kleiner 20°C. Für monofunktionalisierte Polymere, die optional als Bestandteile in der B-Komponente eingesetzt werden können, gelten die Angaben, die für unfunktionalisierte Polymere, die optional als Bestandteile in der B-Komponente eingesetzt werden können, gemacht wurden. Sie enthalten aber zusätzlich eine Funktionalisierung, die mit zumindest einem Bestandteil in der zumindest einen weiteren Komponente reaktiv ist.

Für die Zusammensetzung der unfunktionalisierten Blockcopolymere, die optional als Bestandteil in der B-Komponente eingesetzt werden können, gelten die gleichen Angaben hinsichtlich Aufbau, Zusammensetzung, Wahl der Monomere, Erweichungstemperatur und Struktur, wie sie in der Definition für Präpolymere vom Typ B3 und Typ B4 zu finden sind. Das Gewichtsmittel ihrer Molmassenverteilung liegt bei kleiner 1 000 000 g/mol, bevorzugt bei kleiner 250 000 g/mol. Für monofunktionalisierte Blockcopolymere, die optional als Bestandteile in der B-Komponente eingesetzt werden können, gelten die Angaben, die für unfunktionalisierte Blockcopolymere, die optional als Bestandteile in der B-Komponente eingesetzt werden können, gemacht wurden. Sie enthalten aber zusätzlich eine Funktionalisierung, die mit zumindest einem Bestandteil in der zumindest einen weiteren Komponente reaktiv ist.

Ein monofunktionalisierter Bestandteil der B-Komponente enthält mehr als 80 %, bevorzugt mehr als 90 % an mit einer Funktionalisierung ausgestatteter Moleküle.

Als weitere Bestandteile kann die B-Komponente Klebharze, Weichmacher, rheologisch wirksame Additive, Katalysatoren, Stabilisatoren, Kompatibilisatoren, Kopplungsreagenzien, Antioxidantien, Alterungsschutzmittel, Lichtschutzmittel, Flammschutzmittel, Pigmente, Farbstoffe, Füllstoffe und/oder Blähmittel enthalten. Diese weiteren optional in der B-Komponente einsetzbaren Bestandteile zeichnen sich dadurch aus, dass sie gegenüber allen anderen Bestandteilen der B-Komponente unter den oben definierten Lagerbedingungen nicht reaktiv sind. Sofern mehrere dieser optional in der B-Komponente einsetzbaren Bestandteile Anwendung finden, sind diese auch untereinander unter den oben definierten Lagerbedingungen nicht reaktiv.

### Weitere Komponenten

Teil dieser Erfindung ist der optionale Einsatz einer oder mehrerer weiterer Komponenten. Als eine weitere Komponente können eine C-Komponente oder optional weitere Komponenten zur Anwendung kommen. Die Komponente und jede weitere Komponente, die optional eingesetzt wird, kann jeweils für sich betrachtet aus einem oder mehreren Bestandteilen bestehen. Enthält eine Komponente mehr als einen Bestandteil, dann zeichnen sich die Bestandteile in dieser Einzelkomponente dadurch aus, dass sie innerhalb dieser Komponente untereinander unter den oben definierten Lagerbedingungen nicht reaktiv sind. Die C-Komponente und/oder jede weitere Komponente, die optional eingesetzt wird, kann einen oder mehrere Bestandteile enthalten, die gegenüber einem oder mehreren Bestandteilen einer oder mehrerer anderer Komponenten reaktiv sind. Diesbezüglich gelten die gleichen Angaben hinsichtlich Aufbau, Zusammensetzung, Wahl der Monomere, Erweichungstemperatur und Struktur, wie sie in der Definition für Präpolymere vom Typ A1, Typ A2, Typ A3, Typ A4 zu finden sind. Die C-Komponente und/oder jede weitere Komponente, die optional eingesetzt wird, kann einen oder mehrere Bestandteile enthalten, die gegenüber keinem Bestandteil, der in allen weiteren Komponenten enthalten ist, reaktiv ist.

In einer bevorzugten Auslegung dieser Erfindung beinhaltet die C-Komponente oder weitere, optional einsetzbare Komponenten, eine oder mehrere Substanzen, die zum Ablauf einer Kopplungsreaktion zwischen einem oder mehreren Bestandteilen einer oder mehrerer anderer Komponenten beitragen. Dies können Vernetzer, Initiatoren, Kopplungsreagenzien, Katalysatoren oder weitere reaktive oder reaktionsfördemde Bestandteile sein. Es ist weiterhin vorteilhaft, diese reaktiven oder reaktionsfördemden Substanzen in einem oder mehreren Bestandteilen zu dispergieren, die inert gegenüber diesen Substanzen sind und zudem inert gegenüber einem oder mehreren Bestandteilen in einer oder mehreren weiteren Komponenten sind. Verwendung solcher inerter Bestandteile ist insbesondere dann zu bevorzugen, wenn eine oder mehrere der reaktiven oder reaktionsfördernden Substanzen im unvermischten Zustand fest sind oder so hochviskos, dass sie bei eingestellter Prozesstemperatur nicht pumpbar, dosierbar und/oder förderbar sind.

Die C-Komponente oder weitere, optional einsetzbare Komponenten können vorteilhafterweise im Sinne dieser Erfindung auch und auch ausschließlich niedermolekulare funktionalisierte Verbindungen enthalten. Die Molmasse dieser Verbindung ist kleiner als 5000 g/mol, bevorzugt kleiner als 2500 g/mol, sehr bevorzugt kleiner als 1000 g/mol. Der Funktionalisierungsgrad für diese Verbindung, um erfindungsgemäß zu sein, liegt bei mindestens zwei. Die funktionalisierte Substanz enthält zu mehr als 80 % zumindest zwei Funktionalisierungen, bevorzugt zu mehr als 90 %. Beispiele für funktionelle Gruppen sind im Abschnitt "Kombinationen funktioneller Segmente" beschrieben.

Es ist erfindungsgemäß, in der C-Komponente oder weiteren, optional einsetzbaren Komponenten optional unfunktionalisierte und/oder monofunktionalisierte Polymere und/oder unfunktionalisierte und/oder monofunktionalisierte Blockcopolymere als Bestandteile einzusetzen. Für die Zusammensetzung der unfunktionalisierten Polymere, die optional als Bestandteil in der C-Komponente oder weiteren, optional einsetzbaren Komponenten eingesetzt werden können, gelten die gleichen Angaben wie sie in der Definition für Präpolymere vom Typ A1, Typ A2, Typ B1 und Typ B2 zu finden sind. Das Gewichtsmittel ihrer Molmassenverteilung liegt bei kleiner 1 000 000 g/mol, bevorzugt bei kleiner 100 000 g/mol. Ihre Erweichungstemperatur liegt bei kleiner 200 °C, bevorzugt bei kleiner 100 °C, mehr bevorzugt bei kleiner 20 °C. Für monofunktionalisierte Polymere, die optional als Bestandteile in der C-Komponente oder weiteren, optional einsetzbaren Komponenten eingesetzt werden können, gelten die Angaben, die für unfunktionalisierte Polymere, die optional als Bestandteile in der A-Komponente und B-Komponente eingesetzt werden können, gemacht wurden. Sie enthalten aber zusätzlich eine Funktionalisierung, die mit zumindest einem Bestandteil in der zumindest einen weiteren Komponente reaktiv ist.

Für die Zusammensetzung der unfunktionalisierten Blockcopolymere, die optional als Bestandteil in der C-Komponente oder weiteren, optional einsetzbaren Komponenten eingesetzt werden können, gelten die gleichen Angaben hinsichtlich Aufbau, Zusammensetzung, Wahl der Monomere, Erweichungstemperatur und Struktur, wie sie in der Definition für Präpolymere vom Typ A3, Typ A4, Typ B3 und Typ B4 zu finden sind. Das Gewichtsmittel ihrer Molmassenverteilung liegt bei kleiner 1 000 000 g/mol, bevorzugt bei kleiner 250 000 g/mol. Für monofunktionalisierte Blockcopolymere, die optional als Bestandteile in der C-Komponente oder weiteren, optional einsetzbaren Komponenten eingesetzt werden können, gelten die Angaben, die für unfunktionalisierte Blockcopolymere, die optional als Bestandteile in der A-Komponente und B-Komponente eingesetzt werden können, gemacht wurden. Sie enthalten aber zusätzlich eine Funktionalisierung, die mit zumindest einem Bestandteil in der zumindest einen weiteren Komponente reaktiv ist.

Ein monofunktionalisierter Bestandteil der C-Komponente oder weiterer, optional einsetzbarer Komponenten enthält mehr als 80 %, bevorzugt mehr als 90 % an mit einer Funktionalisierung ausgestatteten Moleküle.

Als weitere Bestandteile kann die C-Komponente oder weitere, optional einsetzbare Komponenten Klebharze, Weichmacher, rheologisch wirksame Additive, Stabilisatoren, Kompatibilisatoren, Antioxidantien, weiterer Alterungsschutzmittel, Lichtschutzmittel, Flammschutzmittel, Pigmente, Farbstoffe, Füllstoffe und/oder Blähmittel enthalten. Diese weiteren optional in der C-Komponente oder weiteren, optional einsetzbaren Komponenten einsetzbaren Bestandteile zeichnen sich dadurch aus, dass sie gegenüber allen anderen Bestandteilen die außer ihnen in ihrer Komponente enthalten sind unter den oben definierten Lagerbedingungen nicht reaktiv sind. Sofern mehrere dieser optional in der C-Komponente oder weiteren, optional einsetzbaren Komponenten einsetzbaren Bestandteile Anwendung finden, sind diese auch untereinander unter den oben definierten Lagerbedingungen nicht reaktiv.

Dem geschulten Leser ist offensichtlich, dass die Bezeichnung A-, B-, C-, usw. Komponente willkürlich ist. Es ist genauso gut und im Sinne dieser Erfindung möglich, die Bezeichnung umgekehrt zu wählen. Die verwendete Nomenklatur "A-Komponente", "B-Komponente", "C-Komponente", usw. soll lediglich dazu dienen, Komponenten, deren Zusammensetzung verschieden ist, voneinander zu unterscheiden. Die verschiedenen erfindungsgemäß zur Anwendung kommenden Komponenten sind also kommutierend.

Zumindest ein Präpolymer, das in zumindest einer Komponente in erfindungsgemäßem Verfahren zum Einsatz kommt, ist ein funktionalisiertes Acrylatcopolymer, das seine funktionellen Gruppen entlang der Polymerkette verteilt, insbesondere statistisch oder gradientenförmig, enthält.

### Erfindungsgemäße Kombinationen von Komponenten

Obwohl es erfindungsgemäß ist, beliebig viele Komponenten zu einem unten definierten Zeitpunkt vor der Beschichtung zu vermischen, so dass bevorzugt eine Kopplung zwischen zumindest jeweils einem reaktiven Bestandteil aus zumindest zwei verschiedenen Komponenten beginnt, bietet es sich aus praktischen Erwägungen an, die Anzahl der Komponenten auf ein Minimum zu beschränken. Besonders zu bevorzugen ist daher ein Prozess, in dem sämtliche Rohstoffe, die für die Kopplung einzelner Bestandteile und zur Einstellung der gewünschten Produkteigenschaften benötigt werden, so auf eine minimale Anzahl von Komponenten verteilt werden, dass eine räumliche Trennung der miteinander reaktiven Bestandteile vor dem Prozessieren gewährleistet ist. Auf diese Weise wird eine gute Lagerungsstabilität der Einzelkomponenten erreicht und die Prozessierbarkeit der Einzelkomponenten insbesondere gegeben durch ihre Viskosität gewährleistet. Besonders bevorzugt ist die Verwendung von zwei Komponenten.

Die Zusammensetzung und Anzahl der Komponenten, die für einen erfindungsgemäßen Prozess ausgewählt werden, richtet sich nach der Vorgabe, dass die Rohkomponenten gut förderbar und mischbar sind und das Gemisch der Komponenten auch im Falle des Einsetzens der Kopplungsreaktion vor Beschichtung noch gut förderbar und gut beschichtbar ist. Die Viskosität der Einzelkomponenten sowie die Geschwindigkeit der Kopplung zwischen reaktiven Bestandteilen- und damit einhergehender Anstieg der Viskosität mit der Zeit sind zentrale Grundanforderungen für die Zusammensetzung der erfindungsgemäßen Startkomponenten und die Art der darin enthaltenden reaktiven Bestandteile. Die Viskosität der Startkomponenten sowie des Komponentengemischs zu Beginn der Kopplungsreaktion sowie die Geschwindigkeit der Kopplungsreaktion der reaktiven Bestandteile sind Charakteristika der verwendeten Ausgangsmaterialien. Die Temperatur dagegen stellt eine wichtige Steuergröße zur Einstellung des Förder- und Mischverhaltens der Startkomponenten und des Komponentengemischs aber auch zur Regelung der Geschwindigkeit der Kopplungsreaktion dar.

Angaben zur Geschwindigkeit erfindungsgemäßer Kopplungsreaktionen sind im Abschnitt "Kombinationen funktioneller Segmente" zu finden. Die Temperaturführung im erfindungsgemäßen Prozess ist im Abschnitt "Lösungsmittelfreier Beschichtungsprozess" definiert. Informationen zu Viskositäten der Startkomponenten und des Komponentengemischs werden im Folgenden gegeben.

Erfindungsgemäß sind Komponenten und Komponentengemische, die bis zum Zeitpunkt der Beschichtung eine Viskosität von kleiner 10 kPa s, bevorzugt von kleiner 1 kPa s, mehr bevorzugt von kleiner als 0,1 kPa s aufweisen. Diese Viskositätsangaben sind als Nullviskositäten bei 60 °C zu verstehen (siehe Prüfmethoden, Test B). Optional weist zumindest eine Komponente einer erfindungsgemäßen Komponentenkombination bei 60 °C eine Nullviskosität von größer als 1 kPa s auf.

Zusätzlich werden an die Startkomponenten Anforderungen im Hinblick auf die zu erreichenden Produkteigenschaften gestellt. Als zentrale Angaben zur Charakterisierung von Produkteigenschaften werden hier die Erweichungstemperatur, der Plateaumodul bei 25°C und einer Frequenz von 1 rad/s, sowie der Gelwert herangezogen. In den Beispielen werden dann Korrelationen mit Daten zur Haftklebrigkeit von aus den erfindungsgemäßen Startkomponenten über den erfindungsgemäßen Verarbeitungs- und Beschichtungsprozess hergestellten erfindungsgemäßen selbstklebenden Produkten aufgezeigt.

Die Zusammensetzung der im Sinne dieser Erfindung zum Einsatz kommenden Komponenten wird so ausgewählt, dass bevorzugt während der Beschichtung eine Haftklebemasse gebildet wird, die zumindest eine Phase enthält, die eine Erweichungstemperatur (siehe Prüfmethoden, Test D) zwischen -125 °C und +50 °C, bevorzugt zwischen -75 °C und +25 °C aufweist. Diese zumindest eine Phase liegt zu mindestens 25 Vol.%, bevorzugt zu mindestens 50 Vol.%, mehr bevorzugt zu mindestens 75 Vol.% in der Haftklebemasse vor. Liegen weitere Phasen in der Haftklebemasse vor, dann weisen diese eine Erweichungstemperatur von kleiner als +200 °C, bevorzugt kleiner als +100 °C, mehr bevorzugt von kleiner als +25 °C auf. Unter Phasen seien im Sinne dieser Erfindung räumlich getrennte Domänen gemeint, die in der Natur der ihnen zu Grunde liegenden Materialien oder Materialsegmente und daraus resultierend Eigenschaften wie z. B. der Erweichungstemperatur verschieden sind. Die typische Längenskala solcher Domänen liegt bei größer 1 nm.

Die Zusammensetzung der im Sinne dieser Erfindung zum Einsatz kommenden Komponenten wird so ausgewählt, dass während der Beschichtung eine Haftklebemasse gebildet wird, die einen Plateaumodul G_{N}⁰ bei 25 °C und 1 rad/s (siehe Prüfmethoden, Test C) zwischen 5 kPa und 1 000 kPa, bevorzugt zwischen 25 kPa und 400 kPa, mehr bevorzugt zwischen 50 kPa und 200 kPa aufweist.

Ein Maß zur Quantifizierung des vernetzten Anteils eines Materials ist der Gelwert (siehe Prüfmethoden, Test E). Die Zusammensetzung der im Sinne dieser Erfindung zum Einsatz kommenden Komponenten wird so ausgewählt, dass während der Beschichtung eine Haftklebemasse gebildet wird, die einen Gelwert von größer als 25 Gew.-%, bevorzugt größer als 40 Gew.-% aufweist.

### Kombinationen funktioneller Segmente

Die erfindungsgemäßen Haftklebemassen werden bevorzugt durch während des Prozessierens beginnende Kopplung von zumindest jeweils einem reaktiven Bestandteil der zumindest zwei zur Vermischung gebrachten Komponenten erzeugt.

Unter Kopplung von zumindest jeweils einem reaktiven Bestandteil der zumindest zwei Komponenten werden im Sinne dieser Erfindung
- eine chemische Reaktion, bei der zumindest eine in zumindest einem reaktiven Bestandteil in zumindest einer Komponente enthaltene Sorte funktioneller Segmente mit zumindest einer weiteren in zumindest einem reaktiven Bestandteil in zumindest einer weiteren Komponente enthaltenen Sorte funktioneller Segmente reagiert und zur Bildung einer kovalenten Bindung führt,
- die Bildung von Wasserstoffbrückenbindungen zwischen zumindest einer in zumindest einem reaktiven Bestandteil in zumindest einer Komponente enthaltenen Sorte funktioneller Segmente und zumindest einer weiteren in zumindest einem reaktiven Bestandteil in zumindest einer weiteren Komponente enthaltenen Sorte funktioneller Segmente,
- die Bildung einer koordinativen Bindung beispielsweise durch Komplexbildung, bei der zumindest eine in zumindest einem reaktiven Bestandteil in zumindest einer Komponente enthaltene Sorte funktioneller Segmente mit zumindest einer weiteren in zumindest einem reaktiven Bestandteil in zumindest einer weiteren Komponente enthaltenen Sorte funktioneller Segmente beteiligt sind, so dass zumindest eine Donor/Akzeptor-Bindung entsteht,
verstanden.

Die Kopplung kann dabei zwischen den funktionellen Segmenten direkt oder auch durch Vermittlung durch eine weitere Substanz, wie z. B. ein Kopplungsreagenz, erfolgen. Für die Position und Anzahl der funktionellen Segmente in den erfindungsgemäß einsetzbaren reaktiven Bestandteilen gelten die Definitionen, die für die Präpolymere vom Typ A1, Typ A2, Typ A3, Typ A4, Typ B1, Typ B2, Typ B3 und Typ B4 sowie für die niedermolekularen reaktiven Bestandteile vom Typ B5 gemacht worden sind.

Soll die erfindungsgemäße Kopplung der reaktiven Bestandteile als eine ***chemische*** ***Reaktion*** ablaufen, dann sind die beteiligten funktionellen Segmente entsprechend der folgenden Ausführungen definiert.

Zumindest eine Sorte erfindungsgemäßer funktioneller Segmente, enthalten in zumindest einem reaktiven Bestandteil in zumindest einer ersten Komponente, hat die allgemeine Struktur (R°R°°R°°°C)-X. R°, R°° und R°°° können unabhängig voneinander gesättigte oder ungesättigte, aliphatische oder aromatische Kohlenwasserstoffreste, die auch untereinander verknüpft sein können, gleicher oder unterschiedlicher Art sein. Die Reste R°, R°° und R°°° können unabhängig voneinander eine beliebige Anzahl an Heteroatomen beinhalten. Die Reste R°, R°° und R°°° können niedermolekularer oder polymerer Natur sein. Bis zu zwei der Reste R°, R°° und R°°° können außerdem auch Wasserstoffatome sein. Die für die Kopplungsreaktion notwendige Gruppe ist mit X bezeichnet.

Das zumindest eine erfindungsgemäße Segment der Struktur (R°R°°R°°°C)-X ist reaktiv gegenüber zumindest einem funktionellen Segment, das in zumindest einem reaktiven Bestandteil in zumindest einer optional zweiten Komponente enthalten ist und das die allgemeine Struktur (R⁺R⁺⁺R⁺⁺⁺C)-Y aufweist. R⁺, R⁺⁺ und R⁺⁺⁺ können unabhängig voneinander gesättigte oder ungesättigte, aliphatische oder aromatische Kohlenwasserstoffreste, die auch untereinander verknüpft sein können, gleicher oder unterschiedlicher Art sein. Die Reste R⁺, R⁺⁺ und R⁺⁺⁺ können unabhängig voneinander eine beliebige Anzahl an Heteroatomen beinhalten. Die Reste R⁺, R⁺⁺ und R⁺⁺⁺ können niedermolekularer oder polymerer Natur sein. Bis zu zwei der Reste R⁺, R⁺⁺ und R⁺⁺⁺ können außerdem auch Wasserstoffatome sein. Die für die Kopplungsreaktion notwendige Gruppe ist mit Y bezeichnet. In speziellen Ausführungen dieser Erfindung können einzelne oder mehrere Reste R⁺, R⁺⁺, R⁺⁺⁺ von gleicher Art sein wie R°, R°° oder R°°°. Ebenso ist es erfindungsgemäß, wenn die Gruppe X und die Gruppe Y gleicher Art sind. In diesem speziellen Fall erfolgt die Kopplung mittels eines Kopplungsreagenzes oder durch Einwirken eines Katalysators oder Initiators. Kopplungsreagenz, Katalysator oder Initiator sind in diesem Fall Bestandteil einer weiteren Komponente. Es ist ebenfalls erfindungsgemäß, wenn die Kopplungsreaktion durch Einwirken aktinischer Strahlung initiiert wird.

Im Sinne dieser Erfindung sind beliebig viele weiterer solcher funktioneller Segmente einsetzbar, die zumindest mit einem der im vorstehenden Absatz definierten funktionellen Segmente reagieren können.

Eine Kopplungsreaktion kann durch chemische Reaktion direkt zwischen den Gruppen X und Y ablaufen, so dass eine Spezies (R°R°°R°°°C)-X'-Y'-(CR⁺R⁺⁺R⁺⁺⁺) gebildet wird. X' und Y' sind dabei im Falle einer chemischen Reaktion die Umsetzungsprodukte der Gruppen X beziehungsweise Y. In speziellen Fällen ist für die Kopplung der Gruppen X und Y ein Kopplungsreagenz X^{a}-Y^{a} oder X^{a}-R^{a}-Y^{a} erforderlich. Ferner ist es auch möglich, zwei Gruppen X über ein Kopplungsreagenz Y-R^{b}-Y zu verknüpfen. R^{a} und R^{b} können gesättigte oder ungesättigte, aliphatische oder aromatische Kohlenwasserstoffreste sein und eine beliebige Anzahl an Heteroatomen beinhalten. Die Reste R^{a} und R^{b} können niedermolekularer oder polymerer Natur sein.

**- Tabelle 1 -**

| Funktionelles Segment vom Typ (R°R°°R°°°C)-X mit -X = | Funktionelles Segment vom Typ (R⁺R⁺⁺R⁺⁺⁺C)-Y mit -Y = | Beispiele für mögliche Kopplungsprodukte (R°R°°R°°°C)-X'-Y'-(CR⁺R⁺⁺R⁺⁺⁺) mit -X'-Y'-= |
|---|---|---|
| -SH | -SH | -S-S- |
| -R^{c}C=CR^{d}R^{e} | -R^{f}C=CR^{g}R^{h} | -R^{c}C-C(R^{d}R^{e})S-S-(R^{g}R^{h})C-CR^{f}- und andere Verknüpfungsmuster |
| -R^{c}C=CR^{d}R^{e} | -SH | -R^{c}C-C(R^{d}R^{e})-S- und andere Verknüpfungsmuster |
| -R^{c}C=CR^{d}R^{e} | -R^{f}C=CR^{g}R^{h}- | -R^{c}C-C(R^{d}R^{e})-R^{g}R^{h})C-CR^{f}- und andere Verknüpfungsmuster |
| -C(=O)-Rⁱ | -NH₂ | -RⁱC=NH- |
| -C(=O)-Rⁱ | -NHR^{J} | -RⁱC=NR^{J}- |
| -C(=O)-Rⁱ | -C(=PR^{k}₃)-R^{J} | -RⁱC=CR^{j}- |
| 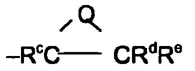 | -OH | -R^{c}C(OH)-C(R^{d}R^{e})-O- und andere Verknüpfungsmuster |
| 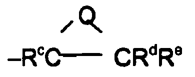 | -NH₂ | -R^{c}C(OH)-C(R^{d}R^{e})-NH- und andere Verknüpfungsmuster |
| 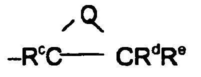 | -NHR^{j} | -R^{C}C(OH)-C(R^{d}R^{e})-NR^{j} und andere Verknüpfungsmuster |
| -C(=O)-OH | -OH | -C(=O)-O- |
| -C(=O)-OH | -NH₂ | -C(=O)-NH- |
| -C(=O)-OH | -NHR^{j} | -C(=O)-NR^{j}- |
| -C(=O)-OH | -NCO | -C(=O)-O-C(=O)-NH- |
| -C(=O)-O-C(=O)-Rⁱ | -OH | -C(=O)-O- |
| -C(=O)-O-C(=O)-Rⁱ | -NH₂ | -C(=O)-NH- |
| -C(=O)-O-C(=O)-Rⁱ | -NHR^{j} | -C(=O)-NR^{j}- |
| -NCO | -OH | -NH-C(=O)-O- |
| -NCO | -NH₂ | -NH-C(=O)-NH- |
| -NCO | -NHR^{j} | -NH-C(=O)-NR^{j}- |
| -NCO | -SH | -NH-C(=O)-S- |
| -OH | -OH | -O- |

In Tabelle 1 sind einige Beispiele für X und Y zusammengestellt sowie mögliche erfindungsgemäße Kombinationen von X und Y aufgezeigt, die zu direkter Kopplung der funktionellen Segmente zu (R°R°°R°°°C)-X'-Y'-(CR⁺R⁺⁺R⁺⁺⁺) führen. Die Tabelle erhebt nicht den Anspruch auf Vollständigkeit, sondern soll lediglich Beispiele für im Sinne dieser Erfindung einsetzbare funktionelle Gruppen und Kombinationen funktioneller Gruppen vor Augen führen. Dem Fachmann sind weitere funktionelle Gruppen und Kombinationen funktioneller Gruppen bekannt, die ebenfalls erfindungsgemäß eingesetzt werden können. Die spezifischen Reaktionsbedingungen sind für die angegebenen Beispiele über die einschlägige Literatur der organischen Chemie zu finden [siehe hierzu beispielsweise J. March, Advanced Organic Chemistry, 4. Aufl., 1992, Wiley, New York oder R. C. Larock, Comprehensive Organic Transformations, 2. Aufl., 1999, Wiley, New York]. Die in Tabelle 1 enthaltenen Reste R^{c}, R^{d}, R^{e}, R^{f}, R^{g}, R^{h}, Rⁱ und R^{j} können unabhängig voneinander gesättigte oder ungesättigte, aliphatische oder aromatische Kohlenwasserstoffreste sein, die eine beliebige Anzahl an Heteroatomen enthalten und niedermolekularer oder polymerer Natur und oder wahlweise Wasserstoffatome sein können. Die Reste können entsprechend der vorstehenden Definition gleichen oder verschiedenen Aufbaus sein. Die Reste R^{c}, R^{d} und R^{e} können untereinander verknüpft sein wie auch R^{f}, R^{g} und R^{h} untereinander verknüpft sein können.
Besonders bevorzugt im Sinne dieser Erfindung können auch Säureanhydride zur Reaktion mit Aminen gebracht werden.

Soll die erfindungsgemäße Kopplung der reaktiven Bestandteile über die Bildung von ***Wasserstoffbrückenbindungen*** ablaufen, dann sind die beteiligten funktionellen Segmente entsprechend der folgenden Ausführungen definiert. Siehe hierzu beispielsweise D. Philp, J. F. Stoddard, Angew. Chem., 1996, 108, 1242 oder C. Schmuck, W. Wienand, Angew. Chem., 2001, 113, 4493.

Zumindest eine Sorte erfindungsgemäßer funktioneller Segmente, enthalten in zumindest einem reaktiven Bestandteil in zumindest einer ersten Komponente, hat die allgemeine Struktur (R^{#}R^{##}R^{###}C)-X^{#}. R^{#}, R^{##} und R^{###} können unabhängig voneinander gesättigte oder ungesättigte, aliphatische oder aromatische Kohlenwasserstoffreste, die auch untereinander verknüpft sein können, gleicher oder unterschiedlicher Art sein. Die Reste R^{#}, R^{##} und R^{###} können unabhängig voneinander eine beliebige Anzahl an Heteroatomen beinhalten. Die Reste R^{#}, R^{##} und R^{###} können niedermolekularer oder polymerer Natur sein. Bis zu zwei der Reste R^{#}**,** R^{##} und R^{###} können außerdem auch Wasserstoffatome sein. Die für die Kopplungsreaktion notwendige Gruppe ist mit X^{#} bezeichnet.

Das zumindest eine erfindungsgemäße Segment der Struktur (R^{#}R^{##}R^{###}C)-X^{#} ist in der Lage, Wasserstoffbrückenbindungen mit zumindest einem funktionellen Segment, das in zumindest einem reaktiven Bestandteil in zumindest einer optional zweiten Komponente enthalten ist und das die allgemeine Struktur (R̅⁻R⁻R⁻C)-Y⁻ aufweist, zu bilden. R⁻, R⁻und R⁻ können unabhängig voneinander gesättigte oder ungesättigte, aliphatische oder aromatische Kohlenwasserstoffreste, die auch untereinander verknüpft sein können, gleicher oder unterschiedlicher Art sein. Die Reste R⁻, R⁻ und R⁻ können unabhängig voneinander eine beliebige Anzahl an Heteroatome beinhalten. Die Reste R⁻, R⁻ und R⁻ können niedermolekularer oder polymerer Natur sein. Bis zu zwei der Reste R⁻, R⁻und R⁻ können außerdem auch Wasserstoffatome sein. Die für die Kopplungsreaktion notwendige Gruppe ist mit Y⁻ bezeichnet. In speziellen Ausführungen dieser Erfindung können einzelne oder mehrere Reste R⁻, R⁻, R⁻ von gleicher Art sein wie R^{#}, R^{##} oder R^{###}. Ebenso ist es erfindungsgemäß, wenn die Gruppe X^{#} und die Gruppe Y⁻ gleicher Art sind. In diesem speziellen Fall erfolgt die Kopplung mittels eines Kopplungsreagenzes, das Bestandteil einer weiteren Komponente ist.

Im Sinne dieser Erfindung sind beliebig viele weiterer solcher funktioneller Segmente einsetzbar, die zumindest mit einem der im vorstehenden Absatz definierten funktionellen Segmente reagieren können.

Eine Kopplungsreaktion kann durch Ausbildung von Wasserstoffbrückenbindungen direkt zwischen den Gruppen X^{#} und Y⁻ ablaufen, so dass eine Spezies (R^{#}R^{##}R^{###}C)-X^{#}-Y⁻-(CR⁻R⁻R⁻) gebildet wird. In speziellen Fällen ist für die Kopplung der Gruppen X^{#} und Y⁻ ein Kopplungsreagenz X^{#a}-Y^{-a} oder X^{#a}-R^{a'}-Y^{-a} erforderlich. Ferner ist es auch möglich, zwei Gruppen X^{#} über ein Kopplungsreagenz Y⁻-R^{b}'-Y⁻ zu verknüpfen. R^{a'} und R^{b'} können gesättigte oder ungesättigte, aliphatische oder aromatische Kohlenwasserstoffreste sein und eine beliebige Anzahl an Heteroatomen beinhalten. Die Reste R^{a'} und R^{b'} können niedermolekularer oder polymerer Natur sein.

Die koppelbaren funktionellen Segmente können einzähnig oder vorzugsweise mehrzähnig sein. Zähnigkeit bezieht sich dabei auf die Möglichkeit eines Segments, eine bestimmte Anzahl von Wasserstoffbrückenbindungen auszubilden.

Wasserstoffbrückenbindungen zwischen einzähnigen oder vorzugsweise mehrzähnigen funktionellen Segmenten sind als strukturbildende Elemente aus verschiedenen Beispielen bekannt. In der Natur dienen Wasserstoffbrückenbindungen zwischen komplementären funktionellen Segmenten zum Aufbau von Desoxyribonukleinsäure (DNA) und Ribonukleinsäure (RNA). Eine spezielle Kombination aus Donor- und Aktzeptorstellen macht es möglich, dass Kopplungen nur nach dem Schlüssel-Schloss-Prinzip erfolgen können. Handelt es sich beispielsweise bei den funktionellen Segmenten α (Typ "Schlüssel") und β (Typ "Schloss") um komplementäre Segmente, die Wasserstoffbrückenbindungen ausbilden können, dann ist eine Verbindung zwischen α und β möglich, zwischen α und α sowie β und β jedoch nicht. Die Natur beschränkt sich bei der Auswahl der funktionellen Segmente beim Aufbau der DNA auf die zwei organischen Basenpaare Adenin/Thymin (bzw. statt Thymin Uracil in RNA) als zweizähnige Segmente und Cytosin/Guanin als dreizähnige Segmente.

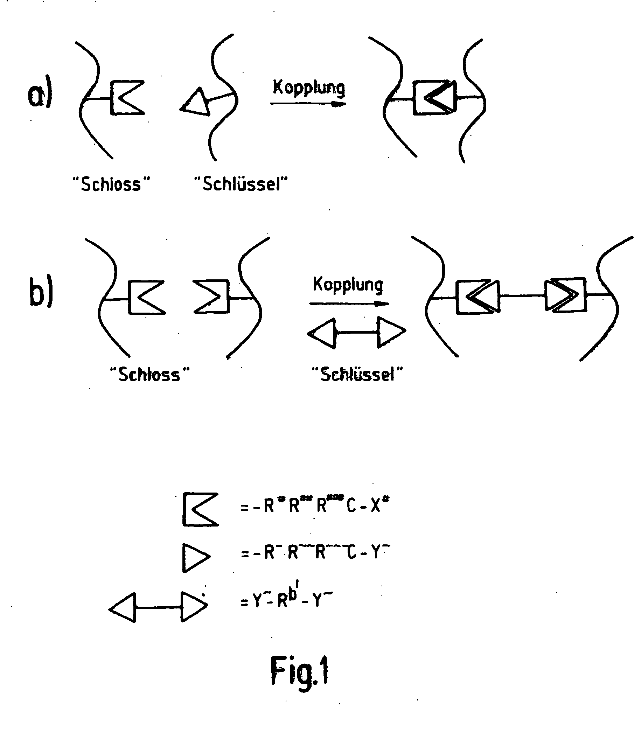

Im Sinne dieser Erfindung können reaktive Bestandteile mit funktionellen Segmenten auf Basis von Adenin, Thymin, Uracil, Cytosin, Guanin, deren Derivaten sowie weiteren Verbindungen, die zur Ausbildung von Wasserstoffbindungen nach dem Schlüssel-Schloss-Prinzip in der Lage sind, wie beispielsweise 2-Ureido-4-pyrimidon und dessen Derivate, 2,6-Diacetylaminopyridin und dessen Derivate, Diacetylpyrimidin und dessen Derivate sowie Ureidoacylpyrimidin und dessen Derivate, eingesetzt werden. Diese Aufzählung erhebt nicht den Anspruch auf Vollständigkeit. Dem Fachmann sind vielmehr weitere Systeme bekannt, die erfindungsgemäß eingesetzt werden können. Wählt man diese Art der Funktionalisierung, dann trägt im Sinne dieser Erfindung zumindest ein Bestandteil in zumindest einer Komponente zumindest zwei funktionelle Segmente vom Typ "Schlüssel" und zumindest ein Bestandteil zumindest einer weiteren Komponente zumindest zwei funktionelle Segmente vom Typ "Schloss". Figur 1 zeigt zwei Beispiele für die Kopplung reaktiver Bestandteile über Ausbildung von Wasserstoffbrückenbindungen durch Verwendung von zwei komplementären funktionellen Segmenten, wobei Figur 1a die direkte Kopplung zweier reaktiver Bestandteile und Figur 1b die Kopplung zweier reaktiver Bestandteile unter Verwendung eines Kopplungsreagenzes zeigt.

Erfindungsgemäß ist ebenfalls die Kopplung von funktionellen Segmenten über ***koordinative Bindungen*** möglich. Beispiele für koordinative Bindungen sind Ligand-Zentralatom-Bindungen in Komplexen, also die Bildung einer koordinativen Bindung mit Metallatomen, die elementar, in Form von Metallsalzen und/oder in Form von Metallkomplexen vorliegen können, sowie alle weiteren Donor-Akzeptor-Bindungen [siehe hierzu beispielsweise D. Philp, J. F. Stoddard, Angew. Chem., 1996,108, 1242; M. Rehahn, Acta Polym., 1998, 49, 201; B. G. G. Lohmeijer, U. S. Schubert, J. Polym. Sci. A Polym. Chem., 2003, 41, 1413 und jeweils darin zitierte Literatur].

Wählt man dieses Kopplungsprinzip im Sinne dieser Erfindung, dann hat zumindest eine Sorte erfindungsgemäßer funktioneller Segmente, enthalten in zumindest einem reaktiven Bestandteil in zumindest einer ersten Komponente, die allgemeine Struktur (R^{§}R^{§§}R^{§§§}C)-X^{§}. R^{§}, R^{§§} und R^{§§§} können unabhängig voneinander gesättigte oder ungesättigte, aliphatische oder aromatische Kohlenwasserstoffreste, die auch untereinander verknüpft sein können, gleicher oder unterschiedlicher Art sein. Die Reste R^{§}, R^{§§} und R^{§§§} können unabhängig voneinander eine beliebige Anzahl an Heteroatomen beinhalten. Die Reste R^{§}, R^{§§} und R^{§§§} können niedermolekularer oder polymerer Natur sein. Bis zu zwei der Reste R^{§}, R^{§§} und R^{§§§} können außerdem auch Wasserstoffatome sein. Die für die Kopplungsreaktion notwendige Gruppe ist mit X^{§} bezeichnet.

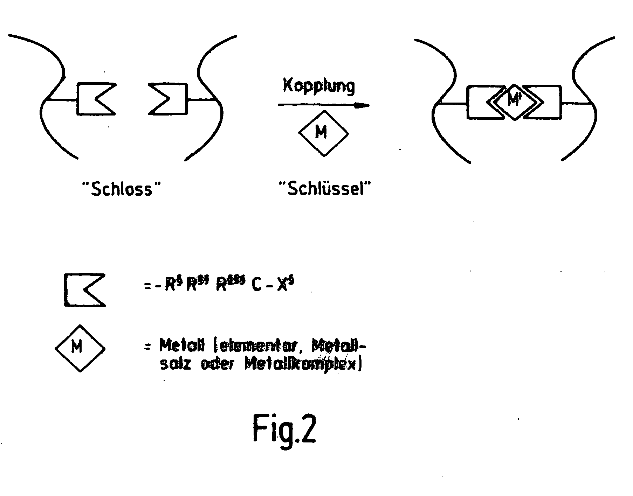

Die funktionellen Segmente in zumindest einem Bestandteil in zumindest einer Komponente sind so aufgebaut, dass sie Gruppen beinhalten, die in der Lage sind, koordinative Bindungen mit Metallen vom Typ M, die elementar, in Form von Metallsalzen oder in Form von Metallkomplexen vorliegen können, ausbilden zu können. Metallkomplexe können auch mehrkernig vorliegen. Einzähnige oder mehrzähnige Segmente können zur Anwendung kommen. Das Kopplungsprinzip ist in Figur 2 schematisch dargestellt. Zumindest zwei funktionelle Segmente vom Typ "Schlüssel" koppeln durch Koordination von M, das die Funktion "Schloss" übernimmt. Bei der Bildung der koordinativen Bindung kann sich die Struktur von M zu M' ändern. Dies kann sich in veränderten Oxidationsstufen aber auch in einer veränderten Ligandenstruktur und/oder -zusammensetzung äußern. Beim Einsatz von Metallatomen ist es im Sinne dieser Erfindung insbesondere vorteilhaft, spezielle Vorkehrungen zur Dispersion von M in der M enthaltenen Komponenten sowie im während des erfindungsgemäßen Prozesses erzeugten Komponentengemisch zu treffen. Dies geschieht bevorzugt durch Wahl besonders geeigneter Gegenionen, wenn es sich um Metallsalze handelt, oder besonders geeignete Komplexliganden, wenn es sich um Metallkomplexe handelt. Geeignete Gegenionen und Komplexliganden übernehmen daher die Funktion von Kompatibilisatoren und Dispergierhilfsmitteln.

Besonders bevorzugt ist eine Kopplung unter Verwendung von chelatisierenden Segmenten. Beispiele für Liganden, die als funktionelle Segmente zum Einsatz kommen können, sind Bipyridin und Terpyridin sowie deren Derivate, Acetylacetonat und dessen Derivate, Ethylendiamintetraessigsäure und dessen Derivate, Nitrilotriessigsäure und dessen Derivate, Hydroxyethylethylendiamintriessigsäure und dessen Derivate, Diethylentriaminpentaessigsäure und dessen Derivate sowie Carbonsäuren. Diese Aufzählung erhebt nicht den Anspruch auf Vollständigkeit. Dem Fachmann sind vielmehr weitere Systeme bekannt, die erfindungsgemäß eingesetzt werden können. Diese funktionellen Segmente sind untereinander nicht reaktiv. Alle diese funktionellen Segmente enthaltenen Bestandteile können daher in einer Komponente verwendet werden. Die Kopplung der funktionellen Segmente erfolgt, sobald als zumindest ein reaktiver Bestandteil in zumindest einer weiteren Komponente Metallatome M mit ihnen vermischt werden. Metallatome M werden in dieser Erfindung ebenfalls als funktionelle Segmente eingestuft.

Als Metallatome eignen sich im Sinne dieser Erfindung alle diejenigen chemischen Elemente, die in der Lage sind, als Akzeptor für koordinative Bindungen zu wirken. Dies sind Erdalkalimetalle, bevorzugt Ca und/oder Mg, Übergangsmetalle, bevorzugt Ti, Mn, Fe, Co, Ni, Cu, Zn, Mo, Ru, Rh, Pd, W, Re, Os, Ir und/oder Pt sowie Al und Lanthanoide. Geeignete Kompatibilisatoren und Dispergierhilfsmittel für diese erfindungsgemäß einsetzbaren Metallatome sind beispielsweise Alkoholate aliphatischer oder aromatischer, gesättigter oder ungesättigter, eine beliebige Anzahl von Heteroatomen enthaltener Moleküle, die niedermolekularer oder polymerer Natur sein können. Es eigenen sich ferner offenkettige oder ringförmige ungesättigte Kohlenwasserstoffe, die eine beliebige Anzahl von Heteroatomen enthaltene können und die niedermolekularer oder polymerer Natur sein können. Weitere erfindungsgemäß einsetzbare Dispergierhilfsmittel und Kompatibilisatoren für M sind niedermolekulare chelatisierende Verbindungen organischer Art.

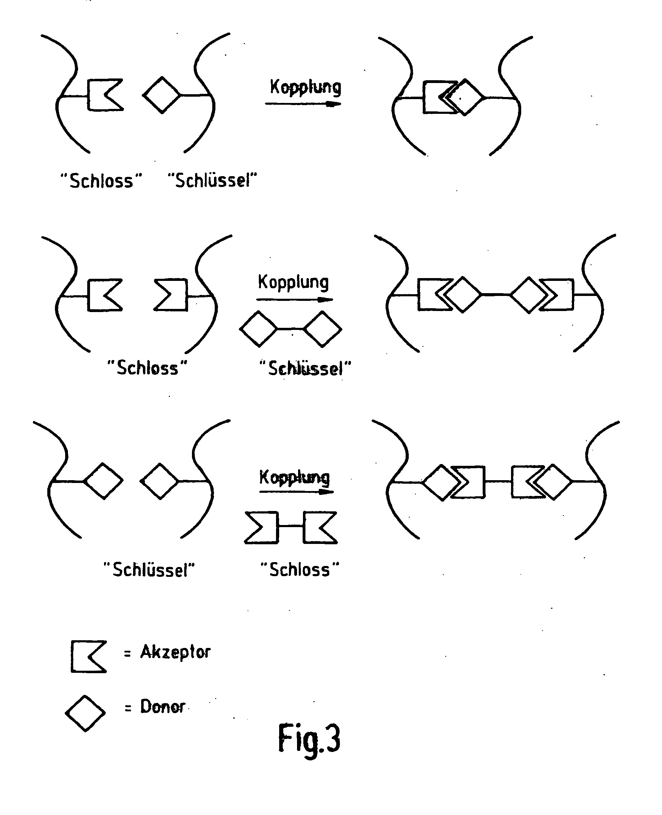

Im Allgemeinen kann M eine Akzeptor-Gruppe ("Schlüssel") sein, die in Verbindung mit einer Donor-Gruppe vom Typ "Schloss" eine koordinative Bindung ausbilden kann. Die Aktzeptorgruppe kann in diesem Fall an ein Präpolymer gebunden sein oder auch als Kopplungsreagenzien eingesetzt werden. Dieser allgemeine Fall ist in Figur 3 schematisch dargestellt. Es ist ferner erfindungsgemäß, mit Akzeptor-Gruppen ausgestattete Präpolymere in Kombination mit Donor-Gruppen tragenden Kopplungsreagenzien zu verwenden.

Im Sinne dieser Erfindung können beliebige Kombinationen verschiedener Arten von Kopplungsreaktionen zur Anwendung kommen.

Die zumindest zwei funktionellen Segmente in zumindest einem Präpolymer können sich, wie bereits bei der Definition des erfindungsgemäßen Aufbaus reaktiver Bestandteile beschrieben wurde, je nach Typ und Struktur eines reaktiven Bestandteils beispielsweise an Kettenenden, an Kettenmittelpunkten, an Blockübergangspunkten, Armverknüpfungspunkten, Verzweigungspunkten und/oder Pfropfungspunkten befinden und/oder durch Wahl und Einsatz spezieller Comonomere bei der Polymerisation der Präpolymere statistisch eingebaut sein. Funktionelle Segmente in einer niedermolekularen Verbindung vom Typ B5 sind an beliebigen zumindest zwei Positionen in diesem reaktiven Bestandteil enthalten.

Comonomere, die besonders vorteilhaft im Sinne dieser Erfindung eingesetzt werden können, um funktionalisierte Präpolymere aufzubauen, sind, ohne Anspruch auf Vollständigkeit zu erheben, Glycidylmethacrylat, Glycidylacrylat, Allylglycidylether, 2-Hydroxyethylmethacrylat, 2-Hydroxyethylacrylat, 3-Hydroxypropylmethacrylat, 3-Hydroxypropylacrylat, 4-Hydroxybutylmethacrylat, 4-Hydroxybutylacrylat, Acrylsäure, Methacrylsäure, Itaconsäure, Crotonsäure, Methacrylamid, Acrylamid, N-Methylolmethacrylamid, N-Methylolacrylamid, Vinylalkohol, 2-Hydroxyethylvinylether, 3-Hydroxypropylvinylether, 4-Hydroxybutylvinylether, Maleinsäureanhydrid, Itaconsäureanhydrid.

Das molare Verhältnis von zumindest zwei verschiedenen Arten funktioneller Segmente lässt sich erfindungsgemäß durch das Einsatzverhältnis der zumindest zwei reaktiven Bestandteile, die diese zumindest zwei funktionellen Segmente verschiedener Art enthalten, und/oder durch die Anzahl an zumindest zwei funktionellen Segmenten verschiedener Art, die im jeweiligen zumindest einen reaktiven Bestandteil eingebaut sind, steuern. Zumindest zwei verschiedene Arten an funktionellen Segmenten kommen erfindungsgemäß zur Anwendung. Diese zumindest zwei Arten an funktionellen Segmenten, die miteinander koppeln können, werden im Sinne dieser Erfindung in einem molaren Verhältnis von 1:100 bis 100:1, bevorzugt von 1:10 bis 10:1, mehr bevorzugt von 1:5 bis 5:1 eingesetzt. Stöchiometrischer Einsatz ist damit ebenfalls erfindungsgemäß. Werden mehr als zwei Arten an funktionellen Segmenten, die miteinander koppeln können, eingesetzt, dann kann jede einzelne Art an funktionellen Segmenten von 100-fachem Überschuss bis 100-fachen Unterschuss in Bezug auf jede weitere Art an funktionellen Segmenten eingesetzt werden, bevorzugt von 10-fachem Überschuss bis 10-fachen Unterschuss, mehr bevorzugt von 5-fachem Überschuss bis 5-fachen Unterschuss.

In einer bevorzugten Auslegung dieser Erfindung führt die Auswahl der Art der funktionellen Segmente und die Art und Menge an optional einsetzbaren Katalysatoren und Initiatoren sowie die Wahl der Prozesstemperatur zu einer bestimmten Reaktivität des Komponentengemischs. Damit einher geht ein Viskositätsanstieg mit der Reaktionszeit. Die Viskosität des Komponentengemischs muss zum Zeitpunkt der Beschichtung gering genug sein, so dass es noch beschichtbar ist. In einer gegebenen Kombination aus Art der funktionellen Segmente, Art und Menge an optional einsetzbaren Katalysatoren und Initiatoren sowie Prozesstemperatur bestimmt die Verweilzeit des Komponentensystems, also die Zeit, die sich eine Volumenelement des Komponentengemischs zwischen Mischbeginn und Beschichtung in der Prozessanlage aufhält, ob es noch beschichtbar ist oder nicht Die Verweilzeit ist durch Massezuführung, Durchsatz und Beschichtungsgeschwindigkeit variierbar. Eine Kombination aus Art der funktionellen Segmente sowie Art und Menge an optional einsetzbaren Katalysatoren und Initiatoren ist dann erfindungsgemäß, wenn sie bei zumindest einer erfindungsgemäßen Prozesstemperatur eine Verweilzeit von einem Tag, bevorzugt einer Stunde, mehr bevorzugt zehn Minuten toleriert und dann noch beschichtbar ist.

### Lösungsmittelfreier Beschichtungsprozess

Die bevorzugt lösungsmittelfreie Verarbeitung der erfindungsgemäßen Haftklebemasse beinhaltet im Sinne dieser Erfindung die getrennte Lagerung der einzelnen Ausgangskomponenten, die Förderung der einzelnen Ausgangskomponenten, die Mischung der Ausgangskomponenten, die Beschichtung der Mischung der Ausgangskomponenten, die Nachbehandlung der beschichteten Haftklebemasse, die optionale Zukaschierung weiterer Träger, optional auch beschichteter Träger, Trennfolien und -papieren, optional auch beschichteter Trennfolien und -papieren sowie die Aufwicklung des hergestellten selbstklebenden Produkts.

Die Herstellung der erfindungsgemäßen Haftklebemassen erfolgt lösungsmittelfrei im Mehrkomponentenreaktiwerfahren, bevorzugt im Zweikomponentenreaktiwerfahren. Besteht eine der zum Einsatz kommenden Komponenten aus mehr als einem Bestandteil, dann wird diese Komponente in einem handelsüblichen evakuierbaren Dissolver vor Vermischung mit der zumindest einen weiteren Komponente homogenisiert. Anlegen eines Vakuums führt dabei zu blasenfreien Bestandteilmischungen. Die homogenisierten Komponenten werden anschließend für den Misch- und Beschichtungsprozess zur Verfügung gestellt. Die Vermischung der zumindest zwei Komponenten erfolgt unter einem Tag, bevorzugt unter einer Stunde, mehr bevorzugt unter zehn Minuten vor der Beschichtung mit einer Mehrkomponenten-Misch- und Dosieranlage, bevorzugt mit einer Zweikomponenten-Misch- und Dosieranlage mit dynamischem Mischsystem. Ein Überblick erfindungsgemäß einsetzbarerer Dosieranlagen ist beispielsweise in Adhäsion - Kleben & Dichten, 2002, Heft 10, Seite 29 ff. zu finden. Diese Erfindung beschränkt sich jedoch nicht auf die dort zusammengestellten Anlagen.

Die Komponenten können aus Fässern oder anderen Containern der Dosier- und Mischanlage zugeführt werden aber auch durch einen kontinuierlichen Prozess. Hierzu eignet sich die direkte Kopplung des Dosier- und Mischsystems mit einem Aufkonzentrationsextruder, sofern einer Komponente noch Lösungsmittel abgezogen werden muss.

Die Prozesstemperatur richtet sich nach den im Sinne dieser Erfindung ausgewählten reaktiven Gruppen sowie weiteren optional einsetzbareren Bestandteilen, die die Reaktion zwischen den reaktiven Bestandteilen beeinflussen, und den sich daraus ergebenden Vorgaben an die Verweilzeit zwischen Mischbeginn und Beschichtung. Efindungsgemäß ist ein Anlagenbetrieb bei Prozesstemperaturen zwischen -20 °C und +100 °C, bevorzugt zwischen 0 °C und +60 °C, sehr bevorzugt zwischen +20 °C und +35 °C. Die Prozesstemperatur kann über den gesamten Prozess bis hin zur Beschichtung auf einem konstanten Niveau gehalten werden oder auch in unterschiedlichen Prozesssegmenten verschiedene Temperaturniveaus annehmen. So ist die Temperierung der Vorratsgefäße der eingesetzten Komponenten grundsätzlich von der Temperierung der Förderelemente und Rohrleitungen, des Mischaggregats sowie der Beschichtungseinheit im erfindungsgemäßen Prozess entkoppelt.

Als Beschichtungsverfahren können im Sinne dieser Erfindung Rakelverfahren, Düsenrakelverfahren, Rollstabdüsenverfahren, Extrusionsdüsenverfahren, Gießdüsen- und Gießerverfahren zur Anwendung kommen. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Zur Speisung des erfindungsgemäßen Beschichtungsaggregats kann zwischen Dosier- und Mischanlage und Beschichtungsaggregat optional ein Förder- und/oder Mischaggregat, z. B. ein Einschnecken- oder Doppelschneckenextruder, zwischengeschaltet sein. Der wahlweise einsetzbare Extruder ist separat beheizbar. Ein Doppelschneckenextruder bietet sich in solchen erfindungsgemäßen Fällen an, wenn dem Komponentengemisch noch weitere Bestandteile, insbesondere feste Bestandteile wie beispielsweise Füllstoffe, zugesetzt werden sollen.

Nach der Beschichtung kann die Haftklebemasse optional vor der Aufwicklung durch einen Kanal gefahren werden, in dem wahlweise thermische Energie durch z. B. elektrische Heizung oder IR-Strahlung und/oder aktinische Strahlung, wie z. B. UV-Strahlung und/oder Elektronenstrahlen, auf das beschichtete Material einwirken kann.

### Erfindungsgemäße selbstklebende Produkte

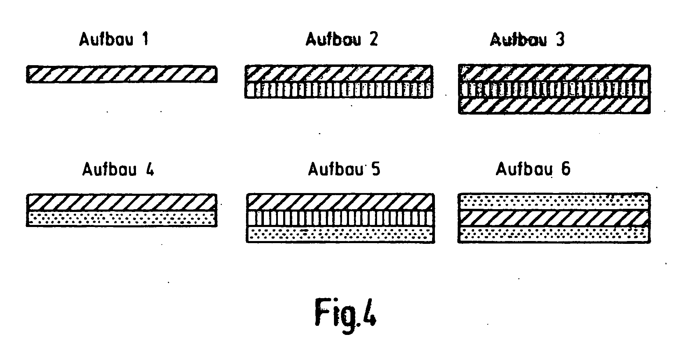

Das erfindungsgemäße Haftklebemassensystem lässt sich über den erfindungsgemäßen Verarbeitungs- und Beschichtungsprozess zum Aufbau verschiedenartiger selbstklebender Produkte wie insbesondere Selbstklebebänder und Selbstklebefolien nutzen. Erfindungsgemäße Aufbauten selbstklebender Produkte am Beispiel von Selbstklebebändern sind in Figur 4 dargestellt. Jede Schicht in den erfindungsgemäßen Aufbauten selbstklebender Produkte kann wahlweise geschäumt sein.

Im einfachsten Fall besteht ein erfindungsgemäßes Selbstklebeband aus der Haftklebemasse in einschichtigem Aufbau (Aufbau 1). Aufbau 1 kann optional einseitig oder beidseitig mit Trennfolie oder Trennpapier eingedeckt werden. Die Schichtdicke der Haftklebemasse beträgt zwischen 1 µm und 2000 µm, bevorzugt zwischen 5 µm und 1000 µm.

Die Haftklebemasse kann sich ferner auf einem Träger, insbesondere einem Folien- oder Papierträger befinden (Aufbau 2). Der Träger kann dabei auf der zur Haftklebemasse zeigenden Seite dem Stand der Technik entsprechend vorbehandelt sein, so dass beispielsweise eine Verbesserung der Haftklebemassenverankerung erzielt wird. Ebenso kann die Seite mit einer funktionalen Schicht ausgerüstet sein, die beispielsweise als Sperrschicht fungieren kann. Die Trägerrückseite kann dem Stand der Technik entsprechend vorbehandelt sein, so dass beispielsweise eine Trennwirkung erreicht wird. Die Trägerrückseite kann ferner bedruckt sein. Die Haftklebemasse kann optional mit einem Trennpapier oder einer Trennfolie eingedeckt werden. Die Haftklebemasse weist eine Schichtdicke zwischen 1 µm und 2000 µm, bevorzugt zwischen 5 µm und 1000 µm auf.

Bei Aufbau 3 handelt es sich um einen doppelseitigen Selbstklebestreifen, der als Mittelschicht eine Trägerfolie, ein Trägerpapier oder einen Trägerschaum enthält. In Aufbau 3 kommen als obere und untere Schicht erfindungsgemäße Haftklebemassen gleicher oder verschiedener Art und/oder gleicher oder verschiedener Schichtdicke zur Anwendung. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Die Haftklebemasseschichten weisen unabhängig voneinander Schichtdicken zwischen 1 µm und 2000 µm, bevorzugt zwischen 5 µm und 1000 µm auf.

Als weiteres doppelseitiges Selbstklebeband ist Aufbau 4 eine erfindungsgemäße Variante. Eine erfindungsgemäße Haftklebemasseschicht trägt auf einer Seite eine weitere Haftklebemassenschicht, die aber beliebiger Natur sein kann und daher nicht erfindungsgemäß sein braucht. Der Selbstklebebandaufbau kann optional mit einem oder zwei Trennfolien oder Trennpapieren eingedeckt sein. Die Haftklebemasseschichten weisen unabhängig voneinander Schichtdicken zwischen 1 µm und 2000 µm, bevorzugt zwischen 5 µm und 1000 µm auf.

Wie in Aufbau 4 handelt es sich auch bei Aufbau 5 um ein doppelseitiges Selbstklebeband, das eine efindungsgemäße Haftklebemasse enthält sowie eine beliebige weitere. Die beiden Haftklebemasseschichten sind in Aufbau 5 jedoch durch einen Träger, eine Trägerfolie, ein Trägerpapier oder einen Trägerschaum voneinander getrennt. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Die Haftklebemasseschichten weisen unabhängig voneinander Schichtdicken zwischen 1 µm und 2000 µm, bevorzugt zwischen 5 µm und 1000 µm auf.

Das erfindungsgemäße Selbstklebeband nach Aufbau 6 enthält eine Schicht erfindungsgemäßen Materials als Mittelschicht, die auf beiden Seiten mit beliebigen Haftklebemassen gleicher oder verschiedener Art ausgestattet ist. Eine oder beide Seiten der Mittelschicht können mit einer funktionalen Schicht ausgerüstet sein, die beispielsweise als Sperrschicht fungieren kann. Bei den äußeren Haftklebemasseschichten brauchen keine erfindungsgemäßen Haftklebemassen zum Einsatz kommen. Die äußeren Haftklebemasseschichten können optional mit Trennpapieren oder Trennfolien eingedeckt werden. Die äußeren Haftklebemasseschichten weisen unabhängig voneinander Schichtdicken zwischen 1 µm und 2000 µm, bevorzugt zwischen 5 µm und 1000 µm auf. Die Dicke der Mittelschicht beträgt zwischen 1 µm und 2000 µm, bevorzugt zwischen 5 µm und 1000 µm.

Die Erfindung wird nachstehend anhand eines Beispiels näher erläutert.

### Prüfmethoden

### Gelpermeationschromatographie (Test A)

Die Bestimmung des mittleren Molekulargewichtes M_{w} und der Polydispersität D erfolgte durch Gelpermeationschromatographie. Als Eluent wurde THF mit 0,1 Vol.-% Trifluoressigsäure eingesetzt. Die Messung erfolgte bei 23°C. Als Vorsäule wurde PSS-SDV, 10 µ, 10³ Å, ID 8.0 mm x 50 mm verwendet. Zur Auftrennung wurde die Säulenkombination PSS-SDV, 10 µ, linear-one mit ID 8.0 mm x 300 mm eingesetzt. Die Probenkonzentration betrug 1 g/l, die Durchflussmenge 0,5 ml pro Minute. Es wurde gegen Polystyrol-Standards gemessen.

### Bestimmung der Schmelzviskosität (Test B)

Als Schmelzviskosität wird die komplexe Nullviskosität bei +60°C herangezogen, die aus linear viskoelastischen Messdaten berechnet und durch Extrapolation auf Scherrate Null erhalten wird. Zur Bestimmung wurde ein RDA2 der Fa. Rheometrics in Platte/Platte-Geometrie bei oszillatorischer Scherung verwendet Der Plattendurchmesser betrug 25 mm und die Deformation 1%. Es wurde eine Frequenz/Temperatur-Variation gefahren, wobei die Temperatur über einen Bereich von -60°C bis +200°C in Schritten von 5 K voreingestellt wurde und bei jeder Temperatur ein Frequenztest von 0,1 rad/s bis 100 rad/s durchgeführt wurde.

### Bestimmung des Plateaumoduls (Test C)

Der Plateaumodul wurde nach dem Messprinzip bestimmt, das auch bei der Bestimmung der Schmelzviskosität (Test B) verwendet wurde, jedoch angewendet auf vernetzte Proben. Als Plateau modul wird der Wert des Speichermoduls bei 1 rad/s und 25 °C verwendet.

### Bestimmung der dynamischen Glasübergangstemperatur (Test D)

Die dynamische Glasübergangstemperatur wurde nach dem Messprinzip bestimmt, das auch bei der Bestimmung der Schmelzviskosität (Test B) verwendet wurde. Als dynamische Glasübergangstemperatur wird diejenige Temperatur abgelesen, bei der der Verlustmodul im Temperatursweep bei 1 rad/s ein Maximum aufweist.

### Bestimmung des Gelanteils (Test E)

Die lösungsmittelfreien Haftklebemassenproben werden in ein Vliestütchen aus Polyethylen (Tyvek-Vlies) eingeschweißt. Lösliche Bestandteile werden mit Toluol über eine Dauer von drei Tagen unter täglichem Lösungsmittelaustausch extrahiert. Aus der Differenz der Probengewichte vor der Extraktion und nach der Extraktion wird der Gelwert als prozentuale Angabe des Gewichtsanteils des Polymers, der nicht mit Toluol extrahierbar ist, bestimmt.

### Klebkraft (Test F)

Die Prüfung der Schälfestigkeit (Klebkraft) erfolgte in Anlehnung an PSTC-1. Auf eine 25 µm dicke PET-Folie wird eine 50 µm dicke Haftklebeschicht aufgebracht. Ein 2 cm breiter Streifen dieses Musters wird auf eine geschliffene Stahlplatte durch fünfmaliges doppeltes Überrollen mittels einer 5 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

### Scherstandzeiten

Die Prüfung erfolgte in Anlehnung an PSTC-7. Auf eine 25 µm dicke PET-Folie wird eine 50 µm dicke Haftklebeschicht aufgebracht. Ein 1,3 cm breiter Streifen dieses Musters wird auf einem polierten Stahlplättchen auf einer Länge von 2 cm mit einer 2 kg-Rolle durch zweimaliges doppeltes Üben-ollen verklebt. Die Plättchen werden für 30 min unter Testbedingungen (Temperatur und Luftfeuchtigkeit), aber ohne Last equilibriert. Dann wird das Testgewicht angehängt, so dass eine Scherbeanspruchung parallel zur Verklebungsfläche entsteht, und die Zeit gemessen, bis die Verklebung versagt. Ist eine Haltezeit von 10 000 min erreicht, so wird der Versuch vor Versagen der Klebbindung abgebrochen.

### Beispiel

**- Tabelle 2 -**

| | |
|---|---|
| Vazo 67^{®} | DuPont |
| Vestanat IPDI^{®} | Hüls |
| Coscat 83^{®} | C.H. Erbslöh |

Alle verwendeten Monomere und Lösungsmittel sind von technischer Qualität.

### Herstellung eines Reglers für die kontrollierte radikalische Polymerisation:

Dibenzyltrithiocarbonat wurde nach einer in Synth. Commun., 1988, 18, 1531 zu findenden Vorschrift aus Benzylbromid, Kohlenstoffdisulfid und Natronlauge hergestellt.

***Beispiel:*** Als **Komponente A** wurde ein statistisches Copolymer vom Typ A2 gewählt, bestehend aus 2-Ethylhexylacrylat, n-Butylacrylat und 2-Hydroxyethylmethacrylat. **Komponente B** bestand aus Isophorondiisocyanat (Vestanat IPDI^{®}), einem System vom Typ B5, sowie einem eine thermische Umsetzung von Hydroxy-Gruppen mit IsocyanatGruppen begünstigenden Katalysator (Coscat 83^{®}).

*Herstellung und Charakterisierung der Komponente A:* In einem für die radikalische Polymerisation konventionellen 2L-Stahlreaktor wurden unter Stickstoffatmosphäre 285 g 2-Ethylhexylacrylat, 285 g n-Butylacrylat, 30 g 2-Hydroxyethylmethacrylat, 400 g Aceton sowie 15,3 g Dibenzyltrithiocarbonat vorgelegt. Der Reaktor wurde auf 58 °C Innentemperatur aufgeheizt und das Monomergemisch mit 0,1 g Vazo 67^{®} (DuPont) initiiert. Nach 4 Stunden 40 Minuten wurde mit 0,1 g Vazo 67^{®} nachinitiiert. Die Temperatur betrug zu diesem Zeitpunkt 67 °C. Nach 24,5 Stunden wurde der Reaktor abgekühlt und die Polymerlösung abgelassen. Das Produkt wurde im Vakuumtrockenschrank vom Lösungsmittel befreit. GPC (Test A) ergab M_{w} = 18 000 g/mol bei einer Polydispersität von 1,23. Rheologische Messungen (Test B) ergaben bei 60°C eine Nullviskosität der Schmelze von η = 9 Pa s. Die dynamische Glasübergangstemperatur (Test D) der Komponente A lag bei -45 °C.

*Vermischen der Komponenten und Beschichtung:* 50 g der Komponente A und 2,44 g der Komponente B, bestehend aus 2,28 g Vestanat IPDI^{®} und 0,16 g Coscat 83^{®}, wurden bei 25 °C miteinander vermischt. Eine homogene Mischung wurde bei einer Scherung des Gemischs mit ca. 5 1/s über einen Zeitraum von 2 min erzeugt und anschließend mit einem Rakel auf silikonisiertes Trennpapier beschichtet. Der Massenauftrag lag bei 50 g/m². Nach 3 Stunden wurden Muster (doppelseitige Selbstklebebänder) genommen, die Test C, D und E unterzogen wurden. Ein Teil des Materials wurde auf eine 25 µm dicke PET-Folie umkaschiert. Muster dieses Materials (einseitige Selbstklebebänder) wurden Test F und G unterzogen.

### PrndukteigenschaRen:

Bei einem Gelanteil (Test E) von 82 % zeigten die Muster eine Klebkraft (Test F) auf Stahl von 0,4 N/cm. Die Scherstandzeiten (Test G) lagen bei einer Belastung von 1 kg bei 23°C bei > 10 000 Minuten. Test C führte zu einem Plateaumodul von 10⁵ Pa. Die dynamische Glasübergangstemperatur (Test D) wurde bei 1 rad/s bei -30 °C gefunden.

Das Beispiel verdeutlicht, dass über das erfindungsgemäße Verfahren unter Verwendung einer erfindungsgemäßen Kombination erfindungsgemäßer Komponenten Haftklebemassen und daraus Selbstklebebänder hergestellt werden können. Durch geeignete Wahl der Anzahl und Zusammensetzung der zum Einsatz kommenden Komponenten sind scherfeste Haftklebemassen, die gleichzeitig eine für den Beschichtungsprozess vorteilhaft geringe Schmelzviskosität aufweisen, zugänglich.

## Patentansprüche

1. Verfahren zur Herstellung einer Haftklebemasse, die durch Kopplung zumindest eines in zumindest einer Komponente enthaltenen reaktiven Bestandteils mit zumindest einem weiteren in zumindest einer weiteren Komponente enthaltenen reaktiven Bestandteil aufgebaut wird, wobei
- der zumindest eine reaktive Bestandteil in der zumindest einen Komponente zumindest zwei funktionelle Gruppen und der zumindest eine Bestandteil in der zumindest einen weiteren Komponente zumindest zwei funktionelle Gruppen enthält;
- zumindest ein reaktiver Bestandteil zumindest einer eingesetzten Komponente ein funktionalisiertes Acrylatcopolymer ist, das ein Gewichtsmittel seiner Molmassenverteilung zwischen 5 000 g/mol und 200 000 g/mol, bevorzugt zwischen 10 000 g/mol und 100 000 g/mol aufweist, wobei das Acrylatoopolymer ein Copolymer ist, das aus zumindest einer unfunktionalisierten Monomersorte und zumindest einer funktionalisierten Monomersorte aufgebaut ist, wobei die zumindest zwei funktionellen Gruppen in Form der einpolymerisierten funktionalisierten Monomersorte eingebracht sind; und
- die Komponenten zur Herstellung der Haftklebemasse lösungsmittelfrei verarbeitet werden.

2. Verfahren nach Anspruch 1, **dadurch gekennzeichnet, daß** die Haftklebemasse durch Kopplung des zumindest einen reaktiven Bestandteils in der zumindest einen Komponente mit dem zumindest einen reaktiven Bestandteil in der zumindest einen weiteren Komponente aufgebaut wird, wobei die Kopplung der zumindest zwei reaktiven Bestandteile während des Vermischens der diese reaktiven Bestandteile enthaltenen mindestens zwei Komponenten beginnt.

3. Verfahren nach Anspruch 1, **dadurch gekennzeichnet, dass** die Haftklebemasse durch Kopplung des zumindest einen reaktiven Bestandteils in der zumindest einen Komponente mit dem zumindest einen reaktiven Bestandteil in der zumindest einen weiteren Komponente aufgebaut wird, wobei die Kopplung der reaktiven Bestandteile nach der Beschichtung des Komponentengemischs durch Einwirken aktinischer Strahlung initiiert wird.

4. Verfahren nach einem oder mehreren der vorangehenden Ansprüche, **dadurch gekennzeichnet, dass** die Prozesstemperatur zwischen -20 °C und +100 °C liegt.

5. Verfahren nach Anspruch 4, **dadurch gekennzeichnet, daß** die Prozesstemperatur zwischen 0 °C und +60 °C liegt.

6. Verfahren nach Anspruch 5, **dadurch gekennzeichnet, daß** die Prozesstemperatur zwischen +20 °C und +35 °C liegt.

7. Verfahren nach Anspruch 1, **dadurch gekennzeichnet, dass** die Haftklebemasse aus zwei Komponenten aufgebaut wird.

8. Verfahren nach einem oder mehreren der vorangehenden Ansprüche, **dadurch gekennzeichnet, dass** alle eingesetzten Komponenten in der Schmelze bei +60 °C eine Nullviskosität von unter 10 kPa s, bevorzugt von unter 1 kPa s, sehr bevorzugt von unter 0,1 kPa s aufweisen.

9. Verfahren nach einem oder mehreren der vorangehenden Ansprüche, **dadurch gekennzeichnet, dass** zumindest eine Komponente in der Schmelze bei +60 °C eine Nullviskosität von über 1 kPa s aufweist.

10. Verfahren nach einem oder mehreren der vorangehenden Ansprüche, **dadurch gekennzeichnet, dass** zumindest eine Komponente zumindest eine Sorte reaktiver Bestandteile mit einem Mengenanteil von zumindest 20 % enthält, die zu mehr als 80 % difunktionalisiert vorliegt, wobei die Art der Funktionalisierung so gewählt ist, dass sie mit zumindest einer Funktionalisierungsart, die in zumindest einer Sorte reaktiver Bestandteile in zumindest einer weiteren Komponente enthalten ist, im vermischten Zustand spontan reagiert oder zur Reaktion gebracht werden kann.

11. Verfahren nach Anspruch 10, **dadurch gekennzeichnet, dass** zumindest ein reaktiver Bestandteil in zumindest einer Komponente zumindest drei funktionelle Gruppen trägt.

12. Verfahren nach Anspruch 10 oder 11, **dadurch gekennzeichnet, dass** die Art der Funktionalisierung zumindest einer ersten Sorte der in den miteinander vermischten zumindest zwei Komponenten zum Einsatz kommenden reaktiven Bestandteile so beschaffen ist, dass mit zumindest einer weiteren Funktionalisierungsart zumindest einer zweiten Sorte reaktiver Bestandteile spontan oder durch Vermittlung aktivierender Additive wie Katalysatoren, Kopplungsagenzien oder Initiatoren und/oder durch Einfluss von Temperatur und/oder aktinischer Strahlung eine chemische Reaktion abläuft, die zu einer kovalenten Kopplung zwischen der zumindest einen ersten und der zumindest einen zweiten Sorte der reaktiven Bestandteile führt.

13. Verfahren nach Anspruch 10 oder 11, **dadurch gekennzeichnet, dass** die Art der Funktionalisierung zumindest einer ersten Sorte der in den miteinander vermischten zumindest zwei Komponenten zum Einsatz kommenden reaktiven Bestandteile so beschaffen ist, dass mit zumindest einer weiteren Funktionalisierungsart zumindest einer zweiten Sorte reaktiver Bestandteile spontan oder durch Vermittlung aktivierender Additive wie Katalysatoren, Kopplungsagenzien oder Initiatoren und/oder durch Einfluss von Temperatur und/oder aktinischer Strahlung eine oder mehrere Wasserstoffbrückenbindungen, bevorzugt mehrzähnige Wasserstoffbrückenbindungen insbesondere nach dem Schlüssel/Schloss-Prinzip gebildet werden, die zu einer Kopplung zwischen der zumindest einen ersten und der zumindest einen zweiten Sorte der reaktiven Bestandteile führt.

14. Verfahren nach Anspruch 10 oder 11, **dadurch gekennzeichnet, dass** die Art der Funktionalisierung zumindest einer ersten Sorte der in den miteinander vermischten zumindest zwei Komponenten zum Einsatz kommenden reaktiven Bestandteile so beschaffen ist, dass mit zumindest einer weiteren Funktionalisierungsart zumindest einer zweiten Sorte reaktiver Bestandteile spontan oder durch Vermittlung aktivierender Additive wie Katalysatoren, Kopplungsagenzien oder Initiatoren und/oder durch Einfluss von Temperatur und/oder aktinischer Strahlung eine oder mehrere koordinative Bindungen insbesondere nach dem Schlüssel/Schloss-Prinzip gebildet werden, die zu einer Kopplung zwischen der zumindest einen ersten und der zumindest einen zweiten Sorte der reaktiven Bestandteile führt.

15. Verfahren nach Anspruch 14, **dadurch gekennzeichnet, dass** die Art der Funktionalisierung zumindest einer Sorte der in zumindest einer Komponente zum Einsatz kommenden reaktiven Bestandteile so beschaffen ist, dass eine koordinative Bindung mit zumindest einem Metallatom, Metallion oder Metallkomplex als zumindest einer weiteren Sorte reaktiver Bestandteile in zumindest einer weiteren Komponente in Form von Komplexbildung insbesondere in Form der Bildung von Chelatkomplexen entsteht, die zu einer nichtkovalenten Kopplung der reaktiven Bestandteile führt.

16. Verfahren nach einem oder mehreren der vorangehenden Ansprüchen, **dadurch gekennzeichnet, dass** zumindest eine Komponente als zumindest eine Sorte reaktiver Bestandteile ein lineares, verzweigtes, gepfropftes oder stemförmiges Polymer enthält, das aus zumindest einer unfunktionalisierten Monomersorte aufgebaut ist und das an zumindest zwei Punkten des Makromoleküls funktionalisiert ist.

17. Verfahren nach einem oder mehreren der vorangehenden Ansprüche, **dadurch gekennzeichnet, dass** zumindest eine Komponente als zumindest eine Sorte reaktiver Bestandteile ein lineares, verzweigtes, gepfropftes oder sternförmiges Copolymer enthält, das aus zumindest einer unfunktionalisierten Monomersorte und zumindest einer.funktionalisierten Monomersorte aufgebaut ist und das an zumindest zwei Punkten des Makromoleküls funktionalisiert ist, wobei die zumindest zwei Funktionalisierungen bevorzugt in Form von statistisch einpolymerisierten funktionalisierten Comonomeren eingebracht sind.

18. Verfahren nach einem oder mehreren der vorangehenden Ansprüche, **dadurch gekennzeichnet, dass** zumindest eine Komponente als zumindest eine Sorte reaktiver Bestandteile ein lineares, verzweigtes, gepfropftes oder stemförmiges Blockcopolymer enthält, das aus zumindest zwei verschiedenen Polymerblöcken, jeweils bestehend aus zumindest einer unfunktionalisierten Monomersorte, aufgebaut ist und das an zumindest zwei Punkten des Makromoleküls funktionalisiert ist.

19. Verfahren nach einem oder mehreren der vorangehenden Ansprüche, **dadurch gekennzeichnet, dass** zumindest eine Komponente als zumindest eine Sorte reaktiver Bestandteile ein lineares, verzweigtes, gepfropftes oder stemförmiges Blockcopolymer enthält, das aus zumindest zwei verschiedenen Polymerblöcken besteht, wobei zumindest ein Polymerblock als Copolymerblock aufgebaut ist und zumindest aus einer unfunktionalisierten Monomersorte und zumindest einer funktionalisierten Monomersorte hergestellt wurde, und das an zumindest zwei Punkten des Makromoleküls funktionalisiert ist, wobei die zumindest zwei Funktionalisierungen bevorzugt in Form von statistisch einpolymerisierten funktionalisierten Comonomeren im zumindest einen Copolymerblock eingebracht sind.

20. Verfahren nach Anspruch 16, **dadurch gekennzeichnet, dass** eines oder mehrere der folgenden Systeme zum Einsatz kommen: Polyether, wie z. B. Polyethylenglykol, Polypropylenglykol oder Polytetrahydrofuran, Polydiene, wie z. B. Polybutadien oder Polyisoprene, hydrierte Polydiene, wie z. B. Polyethylenbutylen oder Polyethylenpropylen, Polyester, wie z. B. Polyethylenterephthalat, Polybutandioladipat oder Polyhexandioladipat, Polycarbonat, Polycaprolacton, Polymere vinylaromatischer Monomere, wie z. B. Polystyrol oder Poly-α-Methylstyrol, Polyalkylvinylether, Polyvinylacetat, Polymere α,β-ungesättigter Ester, wie z. B. Poly(iso-octylacrylat), Poly(n-butylacrylat) oder Polymethylmethacrylat oder Copolymere unfunktionalisierter Acrylate und/oder Methacrylate.

21. Verfahren nach Anspruch 17, **dadurch gekennzeichnet, dass** Copolymere auf Basis einer Mischung von Vinylverbindungen und/oder α, β-ungesättigten Estern zum Einsatz kommen, wobei
(a) die Struktur der für die Copolymerisation der Copolymere verwendeten unfunktionalisierten Monomere durch CH₂=C(R¹)(COOR²) gegeben ist, wobei R¹ = H oder CH₃ ist und R² = H oder ein linearer, verzweigter oder ringförmiger, gesättigter oder ungesättigter Kohlenwasserstoffrest mit 1 bis 30, insbesondere 4 bis 18 Kohlenstoffatomen ist;
(b) die Struktur der für die Copolymerisation der Copolymere verwendeten funktionalisierten Monomere durch CH₂=C(R¹)(COOR²) gegeben ist, wobei R¹ = H oder CH₃ ist und R² = H oder ein linearer, verzweigter oder ringförmiger, gesättigter oder ungesättigter Kohlenwasserstoffrest mit 1 bis 30, insbesondere 4 bis 18 Kohlenstoffatomen ist, der zumindest eine Funktionalisierungsart trägt; und
(c) der Anteil an funktionalisierten Monomeren bezogen auf die Menge an Gesamtmanomeren, aus denen das Copolymer aufgebaut ist, bei bis zu 20 %, bevorzugt bei bis zu 10 %, sehr bevorzugt bei bis zu 5 % liegt.

22. Verfahren nach Anspruch 18, **dadurch gekennzeichnet, dass** in den Polymerblöcken eines oder mehrere der folgenden Systeme zum Einsatz kommen: Polyether, wie z. B. Polyethylenglykol, Polypropylenglykol oder Polytetrahydrofuran, Polydiene, wie z. B. Polybutadien oder Polyisoprene, hydrierte Polydiene, wie z. B. Polyethylenbutylen oder Polyethylenpropylen, Polyester, wie z. B. Polyethylenterephthalat, Polybutandioladipat oder Polyhexandioladipat, Polycarbonat, Polycaprolacton, Polymere vinylaromatischer Monomere, wie z. B. Polystyrol oder Poly-α-Methylstyrol, Polyalkylvinylether, Polyvinylacetat, Polymere α,β-ungesättigter Ester, wie z. B. Poly(iso-octylacrylat), Poly(n-butylacrylat) oder Polymethylmethacrylat oder Copolymere unfunktionalisierter Acrylate und/oder Methacrylate.

23. Verfahren nach Anspruch 19, **dadurch gekennzeichnet, dass** der zumindest eine Copolymerblock auf einer Mischung von Vinylverbindungen und/oder α, βungesättigten Estern basiert, wobei
(a) die Struktur der für die Copolymerisation der Copolymerblöcke verwendeten unfunktionalisierten Monomere durch CH₂=C(R¹)(COOR²) gegeben ist, wobei R¹ = H oder CH₃ ist und R² = H oder ein linearer, verzweigter oder ringförmiger, gesättigter oder ungesättigter Kohlenwasserstoffrest mit 1 bis 30, insbesondere 4 bis 18 Kohlenstoffatomen ist;
(b) die Struktur der für die Copolymerisation der Copolymerblöcke verwendeten funktionalisierten Monomere durch CH₂=C(R¹)(COOR²) gegeben ist, wobei R¹ = H oder CH₃ ist und R² = H oder ein linearer, verzweigter oder ringförmiger, gesättigter oder ungesättigter Kohlenwasserstoffrest mit 1 bis 30, insbesondere 4 bis 18 Kohlenstoffatomen ist, der zumindest eine Funktionalisierungsart trägt.
(c) der Anteil an funktionalisierten Monomeren bezogen auf die Menge an Gesamtmonomeren, aus denen der zumindest eine Copolymerblock aufgebaut ist, bei bis zu 20 %, bevorzugt bei bis zu 10 %, sehr bevorzugt bei bis zu 5 % liegt.

24. Verfahren nach einem oder mehreren der vorangehenden Ansprüche, **dadurch gekennzeichnet, dass** neben zumindest einer ersten Komponente, die zumindest einen reaktiven Bestandteil enthält, zumindest eine zweite Komponente eingesetzt wird, die zumindest eine weitere Sorte reaktiver Bestandteile, die zu mehr als 80 %, bevorzugt zu mehr als 90 % difunktionalisiert oder höher funktionalisiert vorliegt, enthält, wobei die Art der Funktionalisierung so gestaltet ist, dass sie mit zumindest einer Funktionalisierungsart, die in zumindest einer Sorte reaktiver Bestandteile in der zumindest einen ersten Komponente enthalten ist, im vermischten Zustand spontan reagiert oder zur Reaktion gebracht werden kann.

25. Verfahren nach Anspruch 24, **dadurch gekennzeichnet, dass** die zumindest eine zweite Komponente als zumindest eine Sorte reaktiver Bestandteile ein lineares, verzweigte, gepfropftes oder sternförmiges Polymer enthält, das aus zumindest einer unfunktionalisierten Monomersorte aufgebaut ist und das an zumindest zwei Punkten des Makromoleküls funktionalisiert ist.

26. Verfahren nach Anspruch 24, **dadurch gekennzeichnet, dass** die zumindest eine zweite Komponente als zumindest eine Sorte reaktiver Bestandteile ein lineares, verzweigtes, gepfropftes oder sternförmiges Copolymer enthält, das aus zumindest einer unfunktionalisierten Monomersorte und zumindest einer funktionalisierten Monomersorte aufgebaut ist und das an zumindest zwei Punkten des Makromoleküls funktionalisiert ist, wobei die zumindest zwei Funktionalisierungen bevorzugt in Form von statistisch einpolymerisierten funktionalisierten Comonomeren eingebracht sind.

27. Verfahren nach Anspruch 24, **dadurch gekennzeichnet, dass** die zumindest eine zweite Komponente als zumindest eine Sorte reaktiver Bestandteile ein lineares, verzweigtes, gepfropftes oder sternförmiges Blockcopolymer enthält, das aus zumindest zwei verschiedenen Polymerblöcken, jeweils bestehend aus zumindest einer unfunktionalisierten Monomersorte, aufgebaut ist und das an zumindest zwei Punkten des Makromoleküls funktionalisiert ist.

28. Verfahren nach Anspruch 24, **dadurch gekennzeichnet, dass** die zumindest eine zweite Komponente als zumindest eine Sorte reaktiver Bestandteile ein lineares, verzweigtes, gepfropftes oder sternförmiges Blockcopolymer enthält, das aus zumindest zwei verschiedenen Polymerblöcken besteht, wobei zumindest ein Polymerblock als Copolymerblock aufgebaut ist und zumindest eine unfunktionalisierte Monomersorte und zumindest eine funktionalisierte Monomersorte enthält, und das an zumindest zwei Punkten des Makromoleküls funktionalisiert ist, wobei die zumindest zwei Funktionalisierungen bevorzugt in Form von statistisch einpolymerisierten funktionalisierten Comonomeren eingebracht sind.

29. Verfahren nach einem oder mehreren der vorangehenden Ansprüche, **dadurch gekennzeichnet, dass** zumindest ein reaktiver Bestandteil in zumindest einer Komponente eine niedermolekulare funktionalisierte Substanz ist, die eine Molmasse unter 5 000 g/mol, bevorzugt unter 2 500 g/mol, sehr bevorzugt unter 1 000 g/mol aufweist, wobei der Funktionalisierungsgrad bei mindestens zwei liegt, wobei die Anzahl an Molekülen, die diese Funktionalisierung aufweisen, bei über 80 %, bevorzugt bei über 90 % liegt und wobei die Art der Funktionalisierung so gestaltet ist, dass sie mit zumindest einer Funktionalisierungsart, die in zumindest einem reaktiven Bestandteil in zumindest einer weiteren Komponente enthalten ist, im vermischten Zustand spontan reagiert oder zur Reaktion gebracht werden kann.

30. Haftklebemasse, erhalten durch das Verfahren nach einem oder mehreren der vorstehenden Ansprüche.

31. Haftklebemasse nach einem Anspruch 30, **dadurch gekennzeichnet, dass** sie zumindest ein unfunktionalisiertes oder monofunktionalisiertes Polymer linearer, verzweigter, gepfropfter oder sternförmiger Struktur enthält, wobei das zumindest eine unfunktionalisierte oder monofunktionalisierte Polymer ein Homopolymer, Copolymer oder ein Blockcopolymer, enthaltend eine beliebige Anzahl an Homopolymerblöcken und/oder Copolymerblöcken, ist, wobei das zumindest eine unfunktionalisierte oder monofunktionalisierte Polymer eine Molmasse M_{w} unter 1 000 000 g/mol, bevorzugt unter 100 000 g/mol aufweist und wobei das zumindest eine unfunktionalisierte oder monofunktionalisierte Polymer eine Erweichungstemperatur unter +200 °C, bevorzugt unter +100 °C, sehr bevorzugt unter +20 °C zeigt.

32. Haftklebemasse nach Anspruch 30 oder 31, **dadurch gekennzeichnet, dass** zumindest eine der ihr zu Grunde liegenden Komponente optional Klebharze, Weichmacher, rheologisch wirksame Additive, Katalysatoren, Stabilisatoren, Kompatibilisatoren, Kopplungsreagenzien, Antioxidantien, Alterungsschutzmittel, Lichtschutzmittel, Flammschutzmittel, Pigmente, Farbstoffe, Füllstoffe und/oder Blähmittel enthält.

33. Haftklebemasse nach einem oder mehreren der Ansprüche 30 bis 32, **dadurch gekennzeichnet, dass** die Haftklebemasse im ausreagierten Zustand zumindest eine Phase enthält, die eine Erweichungstemperatur zwischen -125 °C und +50 °C, bevorzugt zwischen -75 °C und +25 °C aufweist.

34. Haftklebemasse nach einem oder mehreren der Ansprüche 30 bis 33, **dadurch gekennzeichnet, dass** die Haftklebemasse im ausreagierten Zustand einen Plateaumodul G_{N}⁰ bei 1 rad/s zwischen 1 kPa und 1 000 kPa, bevorzugt zwischen 25 kPa und 400 kPa, sehr bevorzugt zwischen 50 kPa und 200 kPa aufweist.

35. Haftklebemasse nach einem oder mehreren der Ansprüche 30 bis 34, **dadurch gekennzeichnet, dass** die Haftklebemasse lösungsmittelfrei beschichtbar ist.

36. Selbstklebende Produkte, umfassend eine Haftklebemasse nach einem der Ansprüche 30 bis 34.

## Claims

1. Process for producing a pressure-sensitive adhesive which is constructed by coupling at least one reactive constituent present in at least one component with at least one further reactive constituent present in at least one further component,
- the at least one reactive constituent in the at least one component containing at least two functional groups, and the at least one constituent in the at least one further component containing at least two functional groups;
- at least one reactive constituent of at least one component employed being a functionalized acrylate copolymer which has a weight average of its molar mass distribution between 5000 g/mol and 200 000 g/mol, preferably between 10 000 g/mol and 100 000 g/mol, the acrylate copolymer being a copolymer constructed from at least one nonfunctionalized kind of monomer and at least one functionalized kind of monomer, the at least two functional groups being introduced in the form of the copolymerized functionalized kind of monomer; and
- the components for preparing the pressure-sensitive adhesive being processed solventlessly.

2. Process according to Claim 1, **characterized in that** the pressure-sensitive adhesive is constructed by coupling the at least one reactive constituent in the at least one component with the at least one reactive constituent in the at least one further component, the coupling of the at least two reactive constituents beginning during the mixing of the at least two components comprising these reactive constituents.

3. Process according to Claim 1, **characterized in that** the pressure-sensitive adhesive is constructed by coupling the at least one reactive constituent in the at least one component with the at least one reactive constituent in the at least one further component, the coupling of the reactive constituents being initiated after the coating of the components mixture, by exposure to actinic radiation.

4. Process according to one or more of the preceding claims, **characterized in that** the operating temperature is between -20°C and +100°C.

5. Process according to Claim 4, **characterized in that** the operating temperature is between 0°C and +60°C.

6. Process according to Claim 5, **characterized in that** the operating temperature is between +20°C and +35°C.

7. Process according to Claim 1, **characterized in that** the pressure-sensitive adhesive is constructed from two components.

8. Process according to one or more of the preceding claims, **characterized in that** all of the components employed have a zero-shear viscosity in the melt at +60°C of below 10 kPa s, preferably below 1 kPa s, very preferably below 0.1 kPa s.

9. Process according to one or more of the preceding claims, **characterized in that** at least one component has a zero-shear viscosity in the melt at +60°C of above 1 kPa s.

10. Process according to one or more of the preceding claims, **characterized in that** at least one component contains at least one kind of reactive constituents with a proportion of at least 20%, more than 80% in difunctionalized form, the type of functionalization being selected such that, with at least one functionalization type which is present in at least one kind of reactive constituents in at least one further component, in the mixed state it reacts spontaneously or can be brought to reaction.

11. Process according to Claim 10, **characterized in that** at least one reactive constituent in at least one component carries at least three functional groups.

12. Process according to Claim 10 or 11, **characterized in that** the type of functionalization of at least one first kind of the reactive constituents employed in the intermixed at least two components is such that, with at least one further functionalization type of at least one second kind of reactive constituents, spontaneously or by mediation of activating additives such as catalysts, coupling agents or initiators and/or by influence of temperature and/or actinic radiation, a chemical reaction takes place which leads to covalent coupling between the at least one first kind and the at least one second kind of reactive constituents.

13. Process according to Claim 10 or 11, **characterized in that** the type of functionalization of at least one first kind of the reactive constituents employed in the intermixed at least two components is such that, with at least one further functionalization type of at least one second kind of reactive constituents, spontaneously or by mediation of activating additives such as catalysts, coupling agents or initiators and/or by influence of temperature and/or actinic radiation, one or more hydrogen bonds, preferably multidentate hydrogen bonds, are formed, in particular by the lock-and-key principle, which leads to coupling between the at least one first kind and the at least one second kind of reactive constituents.

14. Process according to Claim 10 or 11, **characterized in that** the type of functionalization of at least one first kind of the reactive constituents employed in the intermixed at least two components is such that, with at least one further functionalization type of at least one second kind of reactive constituents, spontaneously or by mediation of activating additives such as catalysts, coupling agents or initiators and/or by influence of temperature and/or actinic radiation, one or more coordinate bonds are formed, in particular by the lock-and-key principle, which leads to coupling between the at least one first kind and the at least one second kind of reactive constituents.

15. Process according to Claim 14, **characterized in that** the type of functionalization of at least one kind of the reactive constituents employed in at least one component is such that a coordinate bond with at least one metal atom, metal ion or metal complex, as at least one further kind of reactive constituents in at least one further component, comes about in the form of complexation, particularly in the form of the formation of chelate complexes, which leads to noncovalent coupling of the reactive constituents.

16. Process according to one or more of the preceding claims, **characterized in that** at least one component comprises, as at least one kind of reactive constituents, a linear, branched, graft or star polymer which is constructed from at least one nonfunctionalized kind of monomer and which is functionalized at least at two points of the macromolecule.

17. Process according to one or more of the preceding claims, **characterized in that** at least one component comprises, as at least one kind of reactive constituents, a linear, branched, graft or star copolymer which is constructed from at least one nonfunctionalized kind of monomer and at least one functionalized kind of monomer and which is functionalized at least at two points of the macromolecule, the at least two functionalizations being introduced preferably in the form of randomly copolymerized functionalized comonomers.

18. Process according to one or more of the preceding claims, **characterized in that** at least one component comprises, as at least one kind of reactive constituents, a linear, branched, graft or star block copolymer which is constructed from at least two different polymer blocks, each composed of at least one nonfunctionalized kind of monomer, and which is functionalized at least at two points of the macromolecule.

19. Process according to one or more of the preceding claims, **characterized in that** at least one component comprises, as at least one kind of reactive constituents, a linear, branched, graft or star block copolymer which consists of at least two different polymer blocks, at least one polymer block being constructed as a copolymer block and having been prepared from at least one nonfunctionalized kind of monomer and at least one functionalized kind of monomer, and which is functionalized at least at two points of the macromolecule, the at least two functionalizations being introduced preferably in the form of randomly copolymerized functionalized comonomers in the at least one copolymer block.

20. Process according to Claim 16, **characterized in that** one or more of the following systems are employed: polyethers, such as polyethylene glycol, polypropylene glycol or polytetrahydrofuran, polydienes, such as polybutadiene or polyisoprenes, hydrogenated polydienes, such as polyethylenebutylene or polyethylenepropylene, polyesters, such as polyethylene terephthalate, polybutanediol adipate or polyhexanediol adipate, polycarbonate, polycaprolactone, polymers of vinylaromatic monomers, such as polystyrene or poly-α-methylstyrene, polyalkyl vinyl ethers, polyvinyl acetate, polymers of α,β-unsaturated esters, such as poly(isooctyl acrylate), poly(n-butyl acrylate) or polymethyl methacrylate, or copolymers of nonfunctionalized acrylates and/or methacrylates.

21. Process according to Claim 17, **characterized in that** copolymers based on a mixture of vinyl compounds and/or α,β-unsaturated esters are employed,
(a) the structure of the nonfunctionalized monomers used for copolymerizing the copolymers being given by CH₂=C(R¹)(COOR²), R¹ being = H or CH₃ and R² being = H or a linear, branched or cyclic, saturated or unsaturated hydrocarbon radical having 1 to 30, in particular 4 to 18, carbon atoms;
(b) the structure of the functionalized monomers used for copolymerizing the copolymers being given by CH₂=C(R¹)(COOR²), R¹ being = H or CH₃ and R² being = H or a linear, branched or cyclic, saturated or unsaturated hydrocarbon radical having 1 to 30, in particular 4 to 18, carbon atoms which carries at least one functionalization type; and
(c) the fraction of functionalized monomers, based on the amount of total monomers from which the copolymer is constructed, being up to 20%, preferably up to 10%, very preferably up to 5%.

22. Process according to Claim 18, **characterized in that** in the polymer blocks one or more of the following systems are employed: polyethers, such as polyethylene glycol, polypropylene glycol or polytetrahydrofuran, polydienes, such as polybutadiene or polyisoprenes, hydrogenated polydienes, such as polyethylenebutylene or polyethylenepropylene, polyesters, such as polyethylene terephthalate, polybutanediol adipate or polyhexanediol adipate, polycarbonate, polycaprolactone, polymers of vinylaromatic monomers, such as polystyrene or poly-α-methylstyrene, polyalkyl vinyl ethers, polyvinyl acetate, polymers of α,β-unsaturated esters, such as poly(isooctyl acrylate), poly(n-butyl acrylate) or polymethyl methacrylate, or copolymers of nonfunctionalized acrylates and/or methacrylates.

23. Process according to Claim 19, **characterized in that** the at least one copolymer block is based on a mixture of vinyl compounds and/or α,β-unsaturated esters,
(a) the structure of the nonfunctionalized monomers used for copolymerizing the copolymer blocks being given by CH₂=C(R¹)(COOR²), R¹ being = H or CH₃ and R² being = H or a linear, branched or cyclic, saturated or unsaturated hydrocarbon radical having 1 to 30, in particular 4 to 18, carbon atoms;
(b) the structure of the functionalized monomers used for copolymerizing the copolymer blocks being given by CH₂=C(R¹)(COOR²), R¹ being = H or CH₃ and R² being = H or a linear, branched or cyclic, saturated or unsaturated hydrocarbon radical having 1 to 30, in particular 4 to 18, carbon atoms which carries at least one functionalization type; and
(c) the fraction of functionalized monomers, based on the amount of total monomers from which the at least one copolymer block is constructed, being up to 20%, preferably up to 10%, very preferably up to 5%.

24. Process according to one or more of the preceding claims, **characterized in that**, in addition to at least one first component which comprises at least one reactive constituent, at least one second component is used which comprises at least one further kind of reactive constituents, being more than 80%, preferably more than 90%, in difunctionalized or higher polyfunctionalized form, the type of functionalization being such that, with at least one functionalization type which is present in at least one kind of reactive constituents in the at least one first component, in the mixed state, it reacts spontaneously or can be brought to reaction.

25. Process according to Claim 24, **characterized in that** the at least one second component comprises, as at least one kind of reactive constituents, a linear, branched, graft or star polymer which is constructed from at least one nonfunctionalized kind of monomer and which is functionalized at least at two points of the macromolecule.

26. Process according to Claim 24, **characterized in that** the at least one second component comprises, as at least one kind of reactive constituents, a linear, branched, graft or star copolymer which is constructed from at least one nonfunctionalized kind of monomer and at least one functionalized kind of monomer and which is functionalized at least at two points of the macromolecule, the at least two functionalizations being introduced preferably in the form of randomly copolymerized functionalized comonomers.

27. Process according to Claim 24, **characterized in that** the at least one second component comprises, as at least one kind of reactive constituents, a linear, branched, graft or star block copolymer which is constructed from at least two different polymer blocks, each composed of at least one nonfunctionalized kind of monomer, and which is functionalized at least at two points of the macromolecule.

28. Process according to Claim 24, **characterized in that** the at least one second component comprises, as at least one kind of reactive constituents, a linear, branched, graft or star block copolymer which consists of at least two different polymer blocks, at least one polymer block being constructed as a copolymer block and comprising at least one nonfunctionalized kind of monomer and at least one functionalized kind of monomer, and which is functionalized at least at two points of the macromolecule, the at least two functionalizations being introduced preferably in the form of randomly copolymerized functionalized comonomers.

29. Process according to one or more of the preceding claims, **characterized in that** at least one reactive constituent in at least one component is a low molecular mass functionalized substance which has a molar mass below 5000 g/mol, preferably below 2500 g/mol, very preferably below 1000 g/mol, the degree of functionalization being at least two, the number of molecules having this functionalization being above 80%, preferably above 90%, and the type of functionalization being such that, with at least one functionalization type which is present in at least one reactive constituent in at least one further component, in the mixed state, it reacts spontaneously or can be brought to reaction.

30. Pressure-sensitive adhesive obtained by process according to one or more of the preceding claims.

31. Pressure-sensitive adhesive according to Claim 30, **characterized in that** it comprises at least one nonfunctionalized or monofunctionalized polymer of linear, branched, graft or star structure, the at least one nonfunctionalized or monofunctionalized polymer being a homopolymer, a copolymer or a block copolymer containing any desired number of homopolymer blocks and/or copolymer blocks, the at least one nonfunctionalized or monofunctionalized polymer having a molar mass M_{w} below 1 000 000 g/mol, preferably below 100 000 g/mol, and the at least one nonfunctionalized or monofunctionalized polymer exhibiting a softening temperature below +200°C, preferably below +100°C, very preferably below +20°C.

32. Pressure-sensitive adhesive according to Claim 30 or 31, **characterized in that** at least one of its constituent components optionally comprises tackifier resins, plasticizers, rheological additives, catalysts, stabilizers, compatibilizers, coupling reagents, antioxidants, aging inhibitors, light stabilizers, flame retardants, pigments, dyes, fillers and/or expandants.

33. Pressure-sensitive adhesive according to one or more of Claims 30 to 32, **characterized in that** in the fully reacted state the pressure-sensitive adhesive comprises at least one phase which has a softening temperature between -125°C and +50°C, preferably between -75°C and +25°C.

34. Pressure-sensitive adhesive according to one or more of Claims 30 to 33, **characterized in that** in the fully reacted state the pressure-sensitive adhesive has a plateau modulus G_{N}⁰ at 1 rad/s between 1 kPa and 1000 kPa, preferably between 25 kPa and 400 kPa, very preferably between 50 kPa and 200 kPa.

35. Pressure-sensitive adhesive according to one or more of Claims 30 to 34, **characterized in that** the pressure-sensitive adhesive is solventlessly coatable.

36. Self-adhesive products comprising a pressure-sensitive adhesive according to any one of Claims 30 to 34.

## Revendications

1. Procédé pour la préparation d'une masse autoadhésive qui est formée par couplage d'au moins un constituant réactif contenu dans au moins un composant avec au moins un constituant réactif contenu dans au moins un autre composant,
- ledit au moins un constituant réactif dans ledit au moins un composant contenant au moins deux groupes fonctionnels et ledit au moins un constituant dans ledit au moins un autre composant contenant au moins deux groupes fonctionnels ;
- au moins un constituant réactif d'au moins un composant utilisé étant un copolymère d'acrylate fonctionnalisé, qui présente une moyenne pondérale de sa répartition de masses molaires entre 5000 g/mole et 200 000 g/mole, de préférence entre 10 000 g/mole et 100 000 g/mole, le copolymère d'acrylate étant un copolymère qui est formé à partir d'au moins un type de monomères non fonctionnalisés et d'au moins un type de monomères fonctionnalisés, lesdits au moins deux groupes fonctionnels étant introduits sous forme des types de monomères fonctionnalisés copolymérisés ; et
- les composants étant transformés sans solvant pour la préparation de la masse autoadhésive.

2. Procédé selon la revendication 1, **caractérisé en ce que** la masse autoadhésive est formée par couplage dudit au moins un constituant réactif dans ledit au moins un composant avec ledit au moins un constituant réactif dans ledit au moins un autre composant, le couplage desdits au moins deux constituants réactifs démarrant pendant le mélange desdits au moins deux composants contenant ces constituants réactifs.

3. Procédé selon la revendication 1, **caractérisé en ce que** la masse autoadhésive est formée par couplage dudit au moins un constituant réactif dans ledit au moins un composant avec ledit au moins un constituant réactif dans ledit au moins un autre composant, le couplage des constituants réactifs étant initié après le revêtement du mélange des composants par l'action d'un rayonnement actinique.

4. Procédé selon l'une ou plusieurs des revendications précédentes, **caractérisé en ce que** la température de procédé est située entre -20°C et +100°C.

5. Procédé selon la revendication 4, **caractérisé en ce que** la température de procédé est située entre 0°C et +60°C.

6. Procédé selon la revendication 5, **caractérisé en ce que** la température de procédé est située entre +20°C et +35°C.

7. Procédé selon la revendication 1, **caractérisé en ce que** la masse autoadhésive est formée à partir de deux composants.

8. Procédé selon l'une ou plusieurs des revendications précédentes, **caractérisé en ce que** tous les composants utilisés dans la masse fondue présentent à +60°C une viscosité zéro inférieure à 10 kPa.s, de préférence inférieure à 1 kPa.s, de manière tout à fait préférée inférieure à 0,1 kPa.s.

9. Procédé selon l'une ou plusieurs des revendications précédentes, **caractérisé en ce qu'**au moins un composant dans la masse fondue présente à +60°C une viscosité zéro supérieure à 1 kPa.s.

10. Procédé selon l'une ou plusieurs des revendications précédentes, **caractérisé en ce qu'**au moins un composant contient au moins un type de constituants réactifs en une proportion en quantité d'au moins 20%, qui se trouve à raison de plus de 80% sous forme difonctionnalisée, le type de fonctionnalisation étant choisi de manière telle qu'il réagit spontanément ou peut être amené à réagir à l'état mélangé avec au moins un type de fonctionnalisation qui est contenu dans au moins un type de constituants réactifs dans au moins un autre composant.

11. Procédé selon la revendication 10, **caractérisé en ce qu'**au moins un constituant réactif dans au moins un composant porte au moins trois groupes fonctionnels.

12. Procédé selon la revendication 10 ou 11,
**caractérisé en ce que** le type de fonctionnalisation d'au moins un premier type des constituants réactifs utilisés dans lesdits au moins deux composants mélangés l'un avec l'autre est tel qu'une réaction chimique se déroule avec au moins un autre type de fonctionnalisation d'au moins un deuxième type de constituant réactif, spontanément ou par l'intermédiaire d'additifs d'activation, tels que des catalyseurs, des agents de couplage ou des initiateurs et/ou sous l'influence de la température et/ou d'un rayonnement actinique, qui conduit à un couplage covalent entre ledit au moins un premier et ledit au moins un deuxième type de constituant réactif.

13. Procédé selon la revendication 10 ou 11,
**caractérisé en ce que** le type de fonctionnalisation d'au moins un premier type des constituants réactifs utilisés dans lesdits au moins deux composants mélangés l'un avec l'autre est tel qu'il se forme, avec au moins un autre type de fonctionnalisation d'au moins un deuxième type de constituant réactif, spontanément ou par l'intermédiaire d'additifs d'activation, tels que des catalyseurs, des agents de couplage ou des initiateurs et/ou sous l'influence de la température et/ou d'un rayonnement actinique, une ou plusieurs liaisons de type pont d'hydrogène, de préférence des liaisons de type pont d'hydrogène polydentates en particulier selon le principe clef/serrure, qui condui(sen)t à un couplage entre ledit au moins un premier et ledit au moins un deuxième type de constituant réactif.

14. Procédé selon la revendication 10 ou 11, **caractérisé en ce que** le type de fonctionnalisation d'au moins un premier type des constituants réactifs utilisés dans lesdits au moins deux composants mélangés l'un avec l'autre est tel qu'il se forme, avec au moins un autre type de fonctionnalisation d'au moins un deuxième type de constituant réactif, spontanément ou par l'intermédiaire d'additifs d'activation, tels que des catalyseurs, des agents de couplage ou des initiateurs et/ou sous l'influence de la température et/ou d'un rayonnement actinique, une ou plusieurs liaisons de coordination, en particulier selon le principe clef/serrure, qui condui(sen)t à un couplage entre ledit au moins un premier et ledit au moins un deuxième type de constituant réactif.

15. Procédé selon la revendication 14, **caractérisé en ce que** le type de fonctionnalisation d'au moins un type des constituants réactifs utilisés dans au moins un composant est tel qu'il se forme une liaison de coordination avec au moins un atome métallique, un ion métallique ou un complexe métallique en tant qu'au moins un autre type de constituants réactifs dans au moins un autre composant sous forme d'une formation de complexe, en particulier sous forme de la formation de complexes chélatés, qui conduit à un couplage non covalent des constituants réactifs.

16. Procédé selon l'une ou plusieurs des revendications précédentes, **caractérisé en ce qu'**au moins un composant contient, en tant qu'au moins un type de constituants réactifs, un polymère linéaire, ramifié, greffé ou en forme d'étoile, qui est formé à partir d'au moins un type de monomères non fonctionnalisés et qui est fonctionnalisé en au moins deux points de la macromolécule.

17. Procédé selon l'une ou plusieurs des revendications précédentes, **caractérisé en ce qu'**au moins un composant contient, en tant qu'au moins un type de constituants réactifs, un copolymère linéaire, ramifié, greffé ou en forme d'étoile, qui est formé à partir d'au moins un type de monomères non fonctionnalisés et d'au moins un type de monomères fonctionnalisés et qui est fonctionnalisé en au moins deux points de la macromolécule, lesdites au moins deux fonctionnalisations étant de préférence introduites sous forme de comonomères fonctionnalisés copolymérisés statistiquement.

18. Procédé selon l'une ou plusieurs des revendications précédentes, **caractérisé en ce qu'**au moins un composant contient, en tant qu'au moins un type de constituants réactifs, un copolymère à blocs linéaire, ramifié, greffé ou en forme d'étoile, qui est formé à partir d'au moins deux blocs polymères différents, constitués à chaque fois par au moins un type de monomères non fonctionnalisés et qui est fonctionnalisé en au moins deux points de la macromolécule.

19. Procédé selon l'une ou plusieurs des revendications précédentes, **caractérisé en ce qu'**au moins un composant contient, en tant qu'au moins un type de constituants réactifs, un copolymère à blocs linéaire, ramifié, greffé ou en forme d'étoile, qui est formé à partir d'au moins deux blocs polymères différents, au moins un bloc polymère étant formé en tant que bloc copolymère et préparé au moins à partir d'un type de monomères non fonctionnalisés et au moins d'un type de monomères fonctionnalisés et qui est fonctionnalisé en au moins deux points de la macromolécule, lesdites au moins deux fonctionnalisations étant de préférence introduites sous forme de comonomères fonctionnalisés copolymérisés statistiquement dans au moins un bloc copolymère.

20. Procédé selon la revendication 16, **caractérisé en ce qu'**un ou plusieurs des systèmes suivants sont utilisés : les polyéthers, tels que par exemple le polyéthylèneglycol, le polypropylèneglycol ou le polytétrahydrofuranne, les polydiènes, tels que par exemple le polybutadiène ou les polyisoprènes, les polydiènes hydrogénés, tels que par exemple le polyéthylènebutylène ou le polyéthylènepropylène, les polyesters, tels que par exemple le poly(téréphtalate d'éthylène), le poly(adipate de butanediol) ou le poly(adipate d'hexanediol), le polycarbonate, la polycaprolactone, les polymères de monomères aromatiques de vinyle, tels que par exemple le polystyrène ou le poly-α-méthylstyrène, les polyalkylvinyléthers, le poly(acétate de vinyle), les polymères d'esters α,β-insaturés, tels que par exemple le poly(acrylate d'isooctyle), le poly(acrylate de n-butyle) ou le poly(méthacrylate de méthyle) ou les copolymères d'acrylates et/ou de méthacrylates non fonctionnalisés.

21. Procédé selon la revendication 17, **caractérisé en ce qu'**on utilise des copolymères à base d'un mélange de composés de vinyle et/ou d'esters α,β-insaturés, où
(a) la structure des monomères non fonctionnalisés utilisés pour la copolymérisation des copolymères est donnée par CH₂=C(R¹) (COOR²) , où R¹ = H ou CH₃ et R² = H ou un radical hydrocarboné linéaire, ramifié ou annulaire, saturé ou insaturé comprenant 1 à 30, en particulier 4 à 18 atomes de carbone ;
(b) la structure des monomères fonctionnalisés utilisés pour la copolymérisation des copolymères est donnée par CH₂=C(R¹)(COOR²) , où R¹ = H ou CH₃ et R² = H ou un radical hydrocarboné linéaire, ramifié ou annulaire, saturé ou insaturé comprenant 1 à 30, en particulier 4 à 18 atomes de carbone, qui porte au moins un type de fonctionnalisation ; et
(c) la proportion de monomères fonctionnalisés par rapport à la quantité totale de monomères, à partir desquels le copolymère est formé, est de jusqu'à 20%, de préférence jusqu'à 10%, de manière tout à fait préférée jusqu'à 5%.

22. Procédé selon la revendication 18, **caractérisé en ce qu'**un ou plusieurs des systèmes suivants sont utilisés dans les blocs polymères : les polyéthers, tels que par exemple le polyéthylèneglycol, le polypropylèneglycol ou le polytétrahydrofuranne, les polydiènes, tels que par exemple le polybutadiène ou les polyisoprènes, les polydiènes hydrogénés, tels que par exemple le polyéthylènebutylène ou le polyéthylènepropylène, les polyesters, tels que par exemple le poly(téréphtalate d'éthylène), le poly(adipate de butanediol) ou le poly(adipate d'hexanediol), le polycarbonate, la polycaprolactone, les polymères de monomères aromatiques de vinyle, tels que par exemple le polystyrène ou le poly-α-méthylstyrène, les polyalkylvinyléthers, le poly(acétate de vinyle), les polymères d'esters α,β-insaturés, tels que par exemple le poly(acrylate d'isooctyle), le poly(acrylate de n-butyle) ou le poly(méthacrylate de méthyle) ou les copolymères d'acrylates et/ou de méthacrylates non fonctionnalisés.

23. Procédé selon la revendication 19, **caractérisé en ce que** ledit au moins un bloc copolymère est à base d' un mélange de composés de vinyle et/ou d'esters α,β-insaturés, où
(a) la structure des monomères non fonctionnalisés utilisés pour la copolymérisation des blocs copolymères est donnée par CH₂=C (R¹) (COOR₂), où R¹ = H ou CH₃ et R² = H ou un radical hydrocarboné linéaire, ramifié ou annulaire, saturé ou insaturé comprenant 1 à 30, en particulier 4 à 18 atomes de carbone ;
(b) la structure des monomères fonctionnalisés utilisés pour la copolymérisation des blocs copolymères est donnée par CH₂=C(R¹) (COOR²) , où R¹ = H ou CH₃ et R² = H ou un radical hydrocarboné linéaire, ramifié ou annulaire, saturé ou insaturé comprenant 1 à 30, en particulier 4 à 18 atomes de carbone, qui porte au moins un type de fonctionnalisation.
(c) la proportion de monomères fonctionnalisés par rapport à la quantité totale de monomères, à partir desquels ledit au moins un bloc copolymère est formé, est de jusqu'à 20%, de préférence jusqu'à 10%, de manière tout à fait préférée jusqu'à 5%.

24. Procédé selon l'une ou plusieurs des revendications précédentes, **caractérisé en ce qu'**on utilise, en plus d'au moins un premier composant, qui contient au moins un constituant réactif, au moins un deuxième composant qui contient au moins un autre type de constituants réactifs, qui se trouve, à raison de plus de 80%, de préférence à raison de plus de 90%, sous forme difonctionnalisée ou à fonctionnalité supérieure, le type de fonctionnalisation étant réalisé de manière telle qu'il réagit spontanément ou peut être amené à réagir à l'état mélangé avec au moins un type de fonctionnalisation qui est contenu dans au moins un type de constituants réactifs dans ledit au moins un premier composant.

25. Procédé selon la revendication 24, **caractérisé en ce que** ledit au moins un deuxième composant contient, en tant qu'au moins un type de constituants réactifs, un polymère linéaire, ramifié, greffé ou en forme d'étoile, qui est formé à partir d'au moins un type de monomères non fonctionnalisés et qui est fonctionnalisé en au moins deux points de la macromolécule.

26. Procédé selon la revendication 24, **caractérisé en ce que** ledit au moins un deuxième composant contient, en tant qu'au moins un type de constituants réactifs, un copolymère linéaire, ramifié, greffé ou en forme d'étoile, qui est formé à partir d'au moins un type de monomères non fonctionnalisés et d'au moins un type de monomères fonctionnalisés et qui est fonctionnalisé en au moins deux points de la macromolécule, lesdites au moins deux fonctionnalisations étant de préférence introduites sous forme de comonomères fonctionnalisés copolymérisés statistiquement.

27. Procédé selon la revendication 24, **caractérisé en ce que** ledit au moins un deuxième composant contient, en tant qu'au moins un type de constituants réactifs, un copolymère à blocs linéaire, ramifié, greffé ou en forme d'étoile, qui est formé à partir d'au moins deux blocs polymères différents, constitués à chaque fois par au moins un type de monomères non fonctionnalisés et qui est fonctionnalisé en au moins deux points de la macromolécule.

28. Procédé selon la revendication 24, **caractérisé en ce que** ledit au moins un deuxième composant contient, en tant qu'au moins un type de constituants réactifs, un copolymère à blocs linéaire, ramifié, greffé ou en forme d'étoile, qui est constitué par au moins deux blocs polymères différents, au moins un bloc polymère étant formé en tant que bloc copolymère et contenant au moins un type de monomères non fonctionnalisés et au moins un type de monomères fonctionnalisés et qui est fonctionnalisé en au moins deux points de la macromolécule, lesdites au moins deux fonctionnalisations étant de préférence introduites sous forme de comonomères fonctionnalisés copolymérisés statistiquement.

29. Procédé selon l'une ou plusieurs des revendications précédentes, **caractérisé en ce qu'**au moins un constituant réactif dans au moins un composant est une substance fonctionnalisée de bas poids moléculaire, qui présente une masse molaire inférieure à 5000 g/mole, de préférence inférieure à 2500 g/mole, de manière tout à fait préférée inférieure à 1000 g/mole, le degré de fonctionnalisation étant d'au moins deux, le nombre de molécules qui présentent cette fonctionnalisation étant supérieur à 80%, de préférence supérieur à 90% et le type de fonctionnalisation étant tel qu'il réagit spontanément ou peut être amené à réagir, à l'état mélangé, avec au moins un type de fonctionnalisation qui est contenu dans au moins un constituant réactif dans au moins un autre composant.

30. Masse autoadhésive, obtenue par le procédé selon l'une ou plusieurs des revendications précédentes.

31. Masse autoadhésive selon la revendication 30, **caractérisée en ce qu'**elle contient au moins un polymère non fonctionnalisé ou monofonctionnalisé, de structure linéaire, ramifiée, greffée ou en forme d'étoile, ledit au moins un polymère non fonctionnalisé ou monofonctionnalisé étant un homopolymère, un copolymère ou un copolymère à blocs, contenant un nombre quelconque de blocs homopolymères et/ou de blocs copolymères, ledit au moins un polymère non fonctionnalisé ou monofonctionnalisé présentant une masse molaire M_{w} inférieure à 1 000 000 g/mole, de préférence inférieure à 100 000 g/mole et ledit au moins un polymère non fonctionnalisé ou monofonctionnalisé présentant une température de ramollissement inférieure à +200°C, de préférence inférieure à +100°C, de manière tout à fait préférée inférieure à +20°C.

32. Masse autoadhésive selon la revendication 30 ou 31, **caractérisée en ce qu'**au moins un des composants formant sa base contient éventuellement des résines adhésives, des plastifiants, des additifs à activité rhéologique, des catalyseurs, des stabilisateurs, des agents de comptabilisation, des réactifs de couplage, des antioxydants, des agents de protection contre le vieillissement, des agents de protection contre la lumière, des agents ignifuges, des pigments, des colorants, des charges et/ou des agents gonflants.

33. Masse autoadhésive selon l'une ou plusieurs des revendications 30 à 32, **caractérisée en ce que** la masse autoadhésive, à l'état après la réaction, contient au moins une phase qui présente une température de ramollissement entre -125°C et +50°C, de préférence entre -75°C et +25°C.

34. Masse autoadhésive selon l'une ou plusieurs des revendications 30 à 33, **caractérisée en ce que** la masse autoadhésive, à l'état après la réaction, présente un module de plateau G_{N}⁰ à 1 rad/s entre 1 kPa et 1000 kPa, de préférence entre 25 kPa et 400 kPa, de manière tout à fait préférée entre 50 kPa et 200 kPa.

35. Masse autoadhésive selon l'une ou plusieurs des revendications 30 à 34, **caractérisée en ce que** la masse autoadhésive peut être revêtue en étant exempte de solvants.

36. Produits autoadhésifs comprenant une masse autoadhésive selon l'une quelconque des revendications 30 à 34.
